(19) Europäisches Patentamt
European Patent Office
Office européen des brevets

(11) EP 3 388 465 B1

(12) **EUROPEAN PATENT SPECIFICATION**

(45) Date of publication and mention of the grant of the patent:
**14.09.2022 Bulletin 2022/37**

(21) Application number: **16873126.3**

(22) Date of filing: **09.12.2016**

(51) International Patent Classification (IPC):
***C08G 64/04*** *(2006.01)* ***C08L 69/00*** *(2006.01)*
***C08G 64/06*** *(2006.01)* ***B29C 45/00*** *(2006.01)*
*B29K 69/00* *(2006.01)* *B29K 105/00* *(2006.01)*

(52) Cooperative Patent Classification (CPC):
**C08G 64/06; B29C 45/0001; C08G 64/04; C08L 69/00;** B29K 2069/00

(86) International application number:
**PCT/JP2016/086771**

(87) International publication number:
**WO 2017/099233 (15.06.2017 Gazette 2017/24)**

(54) **FLUIDITY MODIFIER FOR THERMOPLASTIC RESIN AND THERMOPLASTIC RESIN COMPOSITION CONTAINING SAME**

FLUIDITÄTSMODIFIKATOR FÜR THERMOPLASTISCHES HARZ UND THERMOPLASTISCHE HARZZUSAMMENSETZUNG DIE DIESEN ENTHÄLT

MODIFICATEUR DE FLUIDITÉ POUR RÉSINE THERMOPLASTIQUE ET COMPOSITION DE RÉSINE THERMOPLASTIQUE CONTENANT CELUI-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.12.2015 JP 2015242170**
**18.12.2015 JP 2015247592**
**21.12.2015 JP 2015248695**

(43) Date of publication of application:
**17.10.2018 Bulletin 2018/42**

(73) Proprietor: **Mitsubishi Chemical Corporation**
**Tokyo 100-8251 (JP)**

(72) Inventor: **MONDEN, Toshiki**
**Tokyo 100-8251 (JP)**

(74) Representative: **Vossius & Partner**
**Patentanwälte Rechtsanwälte mbB**
**Siebertstrasse 3**
**81675 München (DE)**

(56) References cited:
**WO-A1-2007/119548**
**JP-A- H0 713 363**
**JP-A- 2005 520 925**
**JP-A- 2017 031 245**
**US-A- 4 446 285**
**US-A1- 2003 187 180**
**US-A1- 2009 117 478**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 388 465 B1

**Description**

TECHNICAL FIELD

The present invention relates to a fluidity modifier for thermoplastic resin, and a thermoplastic resin composition containing it. More specifically, the present invention relates to a novel fluidity modifier whose inclusion in a thermoplastic resin represented by an engineering plastic enables improvement of moldability without deteriorating physical properties such as mechanical properties, thermal properties, and optical properties, and a novel thermoplastic resin composition containing it.

BACKGROUND ART

Since thermoplastic resins can be easily processed by melt-molding, they are used in various industrial fields. In particular, engineering plastics and super-engineering plastics, because of their well-balanced heat resistance and strength, are widely used as automobile materials, electric and electronic device materials, housing and building materials, and materials for producing components in other industrial fields.

In general, a thermoplastic resin is melted by heat, and subjected to a molding process such as injection molding or extrusion molding to obtain a molded article. It is known that, in this process, while processing at a high processing temperature needs to be avoided for causing of decomposition and coloring of the thermoplastic resin, an excessively low processing temperature causes a remarkable decrease in the melt viscosity, leading to a partially or totally unmelted state in some cases, which makes the processing impossible. That is, each thermoplastic resin material has its own appropriate processing temperature. Thus, even in a thermoplastic resin having excellent properties, there are limitations in the thickness, size, and shape of the obtained molded article depending on the melt viscosity at the appropriate processing temperature of the resin.

The simplest method for increasing the moldability of a thermoplastic resin is to decrease the molecular weight of the thermoplastic resin to thereby decrease the melt viscosity. However, in general, since a thermoplastic resin is a polymer material, its physical properties including thermal properties and mechanical properties are strongly correlated with the molecular weight, and a decrease in the molecular weight results in deterioration of the above-described excellent physical properties of the thermoplastic resin. Therefore, a method for increasing the fluidity to improve the moldability without remarkably deteriorating the excellent physical properties of thermoplastic resins has been strongly demanded.

For example, polycarbonate resins are known to be engineering plastics having excellent heat resistance, impact resistance, transparency, electrical properties, and fire retardancy, and used in a wide range of fields as described above. However, since they have low fluidity upon melting and show poor moldability, various methods for improvement of the fluidity have been conventionally studied. Examples of the methods conventionally proposed for the improvement of the fluidity of polycarbonate resins include methods in which a polycarbonate resin is alloyed with a styrene-based resin such as polystyrene or an acrylonitrile-butadienestyrene resin (ABS resin) (see, for example, Patent Documents 1 and 2), methods in which a polycarbonate resin is alloyed with a polyester resin (see, for example, Patent Documents 3 and 4), methods in which a polycarbonate resin is alloyed with an acrylic resin (see, for example, Patent Document 5), and methods in which a polycarbonate resin is alloyed with a particular phenolic resin (see, for example, Patent Document 6).

However, the above methods have drawbacks in, for example, that the transparency, one of the excellent properties of the polycarbonate resins, is lost, that detachment occurs in the molded article during injection molding, and that the heat resistance, impact resistance, and fire retardancy remarkably decrease.

Patent Document 7 discloses a polycarbonate resin containing 20 mole% 1,1-bis(4-hydroxy-3-methylphenyl)-10-undecene (DMUDB) and 80 mole% 2,2-bis(4-hydroxyphenyl) propane (BPA). The polycarbonate resin is used for manufacturing electrophotographic photoreceptor used for facsimile, laser printer, and copier.

Patent Document 8 discloses a polycarbonate blend comprising 90 wt% bisphenol A polycarbonate and 10 wt% of a polycarbonate copolymer derived from a 50-50 weight percent mixture of bisphenol-A and 4,4'-dodecylidenebisphenol.

PRIOR ART DOCUMENTS

Patent Documents

Patent Document 1: JP 43-6295 B
Patent Document 2: JP 38-15225 B

Patent Document 3: JP 2009-1619 A
Patent Document 4: JP 1-96245 A
Patent Document 5: JP 5269585 B
Patent Document 6: JP 2007-31682 A
Patent Document 7: US2009/117478 A1
Patent Document 8: US 4446285 A

SUMMARY OF THE INVENTION

PROBLEMS TO BE SOLVED BY THE INVENTION

Although a number of methods have been proposed for improvement of the fluidity of thermoplastic resins, those methods failed to achieve a satisfactory balance between the fluidity and the physical properties of the thermoplastic resins such as thermal properties and mechanical properties.

In particular, regarding optical materials such as polycarbonate resins for light guide plates and the like, materials having both high fluidity (for example, with a flow value (Q value) of not less than 6 (unit: $10^{-2}$ $cm^3$/sec.) as measured using a Koka flow tester according to Appendix C of JIS (1999) K7210 at 240°C at 160 kgf) and high mechanical strength while maintaining high transparency have recently been demanded. However, no technique or fluidity modifier that provides such a polycarbonate resin having an excellent balance among the transparency, mechanical properties, and fluidity has been discovered.

In view of the problems described above, an object of the present invention is to provide a fluidity modifier whose inclusion in an existing thermoplastic resin, especially a transparent amorphous resin such as a polycarbonate resin, enables improvement of the fluidity without deteriorating the original favorable physical properties of the thermoplastic resin, a thermoplastic resin composition containing it, and a method for producing a molded article by injection molding of the composition.

MEANS FOR SOLVING THE PROBLEMS

As a result of intensive study, the present inventors discovered that an aromatic polycarbonate copolymer containing particular amounts of structural units derived from two particular kinds of aromatic dihydroxy compounds is effective as a fluidity modifier for thermoplastic resin, and that a thermoplastic resin composition containing a thermoplastic resin and the fluidity modifier has an excellent balance between the mechanical strength and the fluidity, and also has high transparency in cases where the composition is a polycarbonate resin composition, thereby completing the present invention.

That is, the present invention is constituted by the following [1] to [10].

[1] A fluidity modifier for thermoplastic resin, the fluidity modifier comprising an aromatic polycarbonate copolymer containing:

a carbonate structural unit (A) represented by the following Formula (1):

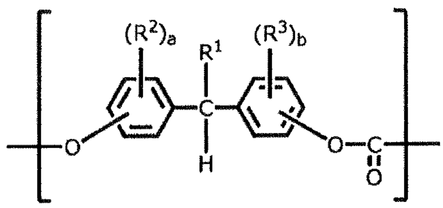

(1)

(wherein in Formula (1), $R^1$ represents $C_8$-$C_{24}$ alkyl group;
$R^2$ and $R^3$ each independently represent a $C_1$-$C_{15}$ monovalent hydrocarbon group; and a and b each independently represent an integer of 0 to 4); and
a carbonate structural unit (B) represented by the following Formula (2):

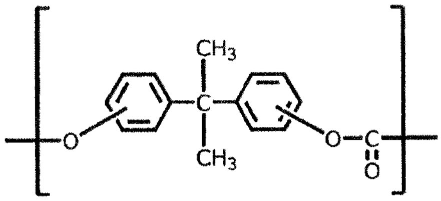 (2)

;

wherein the ratio of the carbonate structural unit (A) to a total of 100 mol% of the carbonate structural unit (A) and the carbonate structural unit (B) is more than 10 mol% and not more than 36.5 mol%.

[2] The fluidity modifier for thermoplastic resin according to [1], wherein the carbonate structural unit (A) is represented by the following Formula (3) or (4):

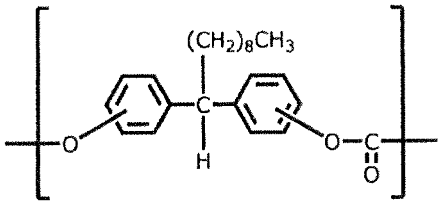 (3)

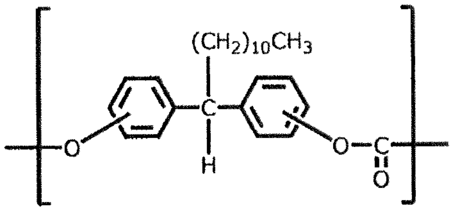 (4)

[3] The fluidity modifier according to [1] or [2], wherein the flow value (Q value) as measured using a Koka flow tester according to Appendix C of JIS (1999) K7210 at 240°C at 160 kgf is not less than 30 (unit: $10^{-2}$ $cm^3$/sec.).
[4] A thermoplastic resin composition comprising 100 parts by mass of a thermoplastic resin and 2 to 100 parts by mass of the fluidity modifier for thermoplastic resin recited in any one of [1] to [3].
[5] The thermoplastic resin composition according to [4], further comprising at least one selected from the group consisting of heat stabilizers, antioxidants, ultraviolet absorbers, brightness improvers, dyes, pigments, and mold release agents.
[6] The thermoplastic resin composition according to [4] or [5], wherein the thermoplastic resin is a polycarbonate resin.
[7] The thermoplastic resin composition according to [4] or [5], wherein the thermoplastic resin is a polycarbonate resin, and the ratio of the carbonate structural unit (A) to the total carbonate structural units in the thermoplastic resin composition is 1 to 20 mol%.
[8] The thermoplastic resin composition according to any one of [4] to [7], wherein the flow value (Q value) as measured using a Koka flow tester according to Appendix C of JIS (1999) K7210 at 240°C at 160 kgf is not less than 6 (unit: $10^{-2}$ $cm^3$/sec.).
[9] The thermoplastic resin composition according to any one of [4] to [8], having a glass transition temperature (Tg) of 90 to 145°C.
[10] A method for producing a thermoplastic resin molded article, the method comprising a step of obtaining a molded article by injection molding of the thermoplastic resin composition recited in any one of [4] to [9].

EFFECT OF THE INVENTION

By inclusion of the fluidity modifier for thermoplastic resin of the present invention in a thermoplastic resin, moldability of the resin can be increased without deteriorating physical properties of the thermoplastic resin such as the mechanical strength and thermal properties. Thus, according to the thermoplastic resin composition containing the fluidity modifier for thermoplastic resin of the present invention, a thermoplastic resin composition having an excellent balance among thin moldability, strength, and thermal properties can be provided, and therefore industrial applicability of the

composition is very high. In particular, by inclusion of the fluidity modifier in a polycarbonate resin, a polycarbonate resin composition having excellent thin moldability, transparency, hue, impact strength, and bending strength can be provided, and the composition can be suitably used for optical members for electric and electronic devices, large-sized automobile window members, and the like.

MODE FOR CARRYING OUT THE INVENTION

The present invention is described below in more detail by way of embodiments, examples, and the like. However, the present invention should not be interpreted as being limited to the embodiments, examples, and the like described below.

Unless otherwise specified, the term "to" in the present description is used such that the values described before and after it are included as the lower limit and the upper limit, respectively. Unless otherwise specified, the term "part" means part by mass, which is expressed on a mass basis.

Aromatic Polycarbonate Copolymer

The fluidity modifier for thermoplastic resin of the present invention includes an aromatic polycarbonate copolymer containing a carbonate structural unit (A) represented by the following Formula (1) and a carbonate structural unit (B) represented by the following Formula (2), wherein the ratio of the carbonate structural unit (A) to a total of 100 mol% of the carbonate structural unit (A) and the carbonate structural unit (B) is more than 10 mol% and not more than 36.5 mol%.

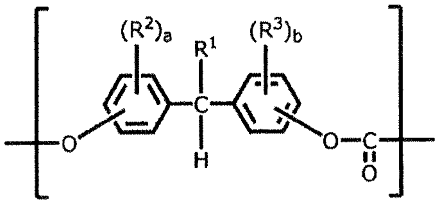

(1)

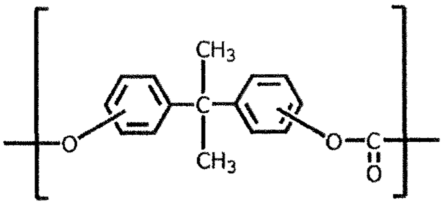

(2)

In Formula (1), $R^1$ represents $C_8$-$C_{24}$ alkyl; $R^2$ and $R^3$ each independently represent a $C_1$-$C_{15}$ monovalent hydrocarbon group; and a and b each independently represent an integer of 0 to 4.

By inclusion, in a thermoplastic resin, of such a fluidity modifier for thermoplastic resin containing an aromatic polycarbonate copolymer including a carbonate structural unit (A) and a carbonate structural unit (B) at particular ratios, the thermoplastic resin can be provided with a remarkably favorable balance between the fluidity and strengths such as the impact strength, bending strength, and cyclic fatigue strength. In particular, by inclusion of the fluidity modifier in a polycarbonate resin, high transparency, hue, and brightness can also be given to the resin.

In the aromatic polycarbonate copolymer contained in the fluidity modifier for thermoplastic resin of the present invention, the above-described carbonate structural unit (A) has $R^1$, which is an aliphatic hydrocarbon chain substituent such as an alkyl group having a carbon number of not less than 8. By the inclusion of the carbonate structural unit (A) having such an aliphatic hydrocarbon chain, when the fluidity modifier is included in a thermoplastic resin to prepare a thermoplastic resin composition, entangling of polymer chains of the thermoplastic resin during melting can be moderately inhibited by the aliphatic hydrocarbon chain contained in the carbonate structure (A) in the aromatic polycarbonate copolymer to reduce friction between the polymer chains, so that high fluidity can be achieved. As a result, the thermoplastic resin composition of the present invention can have high fluidity.

The carbon number of the alkyl group of $R^1$ in the carbonate structural unit (A) is more preferably not less than 9, still more preferably not less than 10, especially preferably not less than 11.

On the other hand, the carbon number of the alkyl group of $R^1$ in the carbonate structural unit (A) is not more than 24. In cases where the long-chain aliphatic chain is too long, heat resistance and mechanical properties are remarkably low, and compatibility with the thermoplastic resin is low, so that mechanical properties and transparency may be deteriorated, which is not preferred. From such a point of view, the carbon number of the $R^1$ is more preferably

not more than 22, still more preferably not more than 18, especially preferably not more than 16.

Examples of the $C_8$-$C_{24}$ alkyl group include linear or branched alkyl groups, and alkyl groups partially having a cyclic structure. In particular, for effective enhancement of the fluidity of the aromatic polycarbonate resin of the present invention, the $C_8$-$C_{24}$ alkyl group is preferably a linear or branched alkyl group.

Specific examples of the linear alkyl groups include n-octyl, n-nonyl, n-decyl, n-undecyl, n-dodecyl, n-tridecyl, n-tetradecyl, n-pentadecyl, n-hexadecyl, n-heptadecyl, n-octadecyl, n-nonadecyl, n-icosyl, n-icosyl, n-henicosyl, n-docosyl, n-tricosyl, and n-tetracosyl. n-Nonyl, n-decyl, n-undecyl, n-dodecyl, n-hexadecyl, and n-octadecyl are preferred. n-Nonyl, n-decyl, n-undecyl, and n-dodecyl are more preferred. n-Dodecyl is especially preferred. By the presence of such an alkyl group, fluidity and mechanical strength of the thermoplastic resin composition of the present invention can be more effectively increased.

Specific examples of the branched alkyl groups include methylheptyl, methyloctyl, methylnonyl, methyldecyl, methylundecyl, methyldodecyl, methyltridecyl, methyltetradecyl, methylpentadecyl, methylhexadecyl, methylheptadecyl, methyloctadecyl, methylnonadecyl, methylicosyl, methylicosyl, methylhenicosyl, methyldocosyl, methyltricosyl,

dimethylheptyl, dimethyloctyl, dimethylnonyl, dimethyldecyl, dimethylundecyl, dimethyldodecyl, dimethyltridecyl, dimethyltetradecyl, dimethylpentadecyl, dimethylhexadecyl, dimethylheptadecyl, dimethyloctadecyl, dimethylnonadecyl, dimethylicosyl, dimethylicosyl, dimethylhenicosyl, dimethyldocosyl,

trimethylheptyl, trimethyloctyl, trimethylnonyl, trimethyldecyl, trimethylundecyl, trimethyldodecyl, trimethyltridecyl, trimethyltetradecyl, trimethylpentadecyl, trimethylhexadecyl, trimethylheptadecyl, trimethyloctadecyl, trimethylnonadecyl, trimethylicosyl, trimethylicosyl, trimethylhenicosyl,

ethylhexyl, ethylheptyl, ethyloctyl, ethylnonyl, ethyldecyl, ethylundecyl, ethyldodecyl, ethyltridecyl, ethyltetradecyl, ethylpentadecyl, ethylhexadecyl, ethylheptadecyl, ethyloctadecyl, ethylnonadecyl, ethylicosyl, ethylicosyl, ethylhenicosyl, ethyldocosyl,

propylhexyl, propylheptyl, propyloctyl, propylnonyl, propyldecyl, propylundecyl, propyldodecyl, propyltridecyl, propyltetradecyl, propylpentadecyl, propylhexadecyl, propylheptadecyl, propyloctadecyl, propylnonadecyl, propylicosyl, propylicosyl, propylhenicosyl,

butylhexyl, butylheptyl, butyloctyl, butylnonyl, butyldecyl, butylundecyl, butyldodecyl, butyltridecyl, butyltetradecyl, butylpentadecyl, butylhexadecyl, butylheptadecyl, butyloctadecyl, butylnonadecyl, butylicosyl, and butylicosyl. In the above examples of branched alkyl groups, the position(s) of branching is/are arbitrary.

In the carbonate structural unit (A) described above, the carbon atom to which the substituent of $R^1$ is bound has a hydrogen atom bound thereto. In cases where $R^1$ has a substituent such as an alkyl group instead of the hydrogen atom, the fluidity-modifying effect and the mechanical strength-improving effect described above cannot be obtained, and heat resistance may be extremely deteriorated.

$R^2$ and $R^3$ in the carbonate structural unit (A) represent $C_1$-$C_{15}$ monovalent hydrocarbon groups. By having the $C_1$-$C_{15}$ monovalent hydrocarbon groups, the thermoplastic resin composition of the present invention can have increased fluidity, strength, hardness, chemical resistance, and the like. Examples of the $C_1$-$C_{15}$ monovalent hydrocarbon groups include $C_1$-$C_{15}$ alkyl groups and $C_2$-$C_{15}$ alkenyl groups. These may be linear, branched, or cyclic. Examples of such monovalent hydrocarbon groups include methyl, ethyl, propyl, isopropyl, n-butyl, isobutyl, sec-butyl, tert-butyl, pentyl, n-hexyl, cyclohexyl, n-heptyl, n-octyl, n-nonyl, n-decyl, n-undecyl, n-dodecyl, n-tridecyl, n-tetradecyl, n-pentadecyl, phenyl, and tolyl. Among these, methyl is preferred. Further, a and b in the carbonate structural unit (A) each independently represent an integer of 0 to 4, preferably 0 to 2, more preferably 0 or 1, still more preferably 0.

Specific examples of the carbonate structural unit (A) include the structural units represented by the following Formulae (3), (4), (7), (9), and (11) to (16). Among these, the structural units of Formulae (3), (4), (7), (9), and (11) to (14) are more preferred; the structural units of Formulae (8) to (11) are still more preferred; the structural units of Formulae (3) and (4) are especially preferred; and the structural unit of Formula (4) is most preferred.

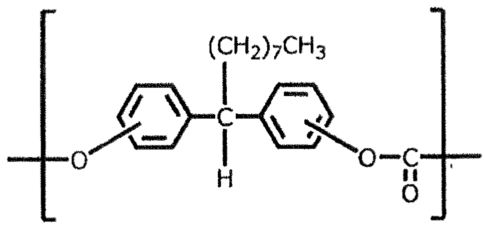

(7)

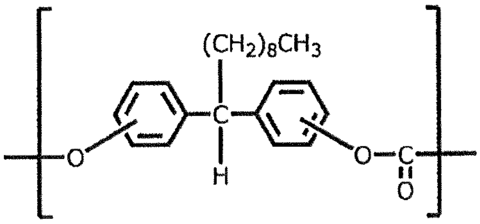

(3)

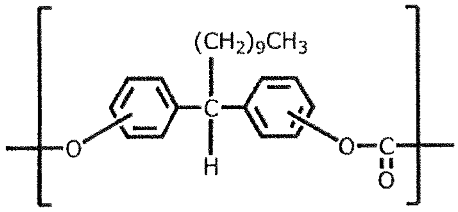

(9)

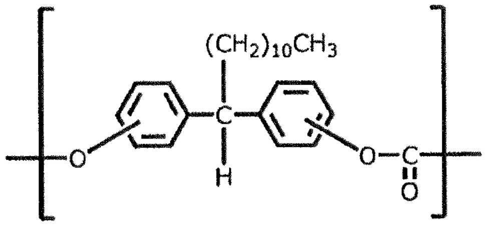

(4)

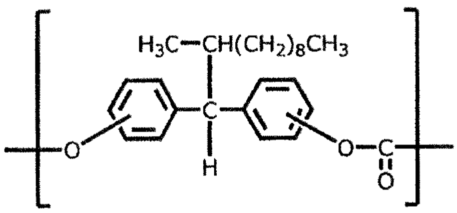

(11)

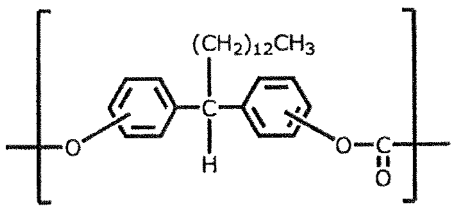

(12)

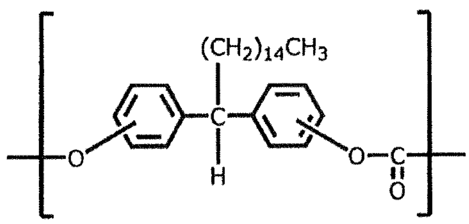

(13)

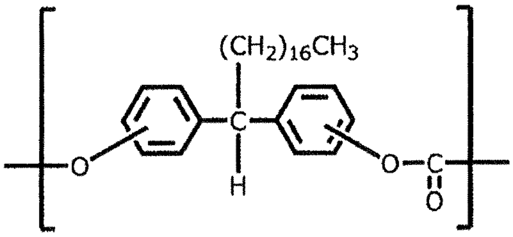

(1 4)

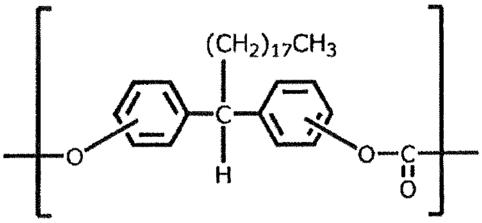

(1 5)

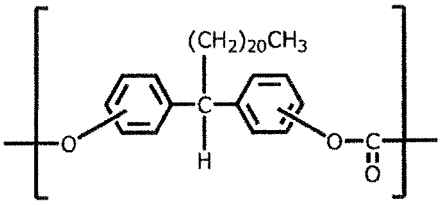

(1 6)

Specific examples of the carbonate structural unit (A) included in the aromatic polycarbonate copolymer contained in the fluidity modifier for thermoplastic resin of the present invention include the structural units represented by the following Formulae (17) to (19). Among these, the structural unit represented by Formula (17) is more preferred since it tends to increase the thermal stability. However, the isomeric structures of Formulae (18) and (19) may also be included at arbitrary ratios.

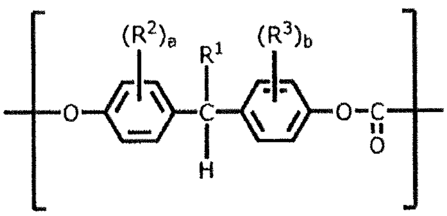

(1 7)

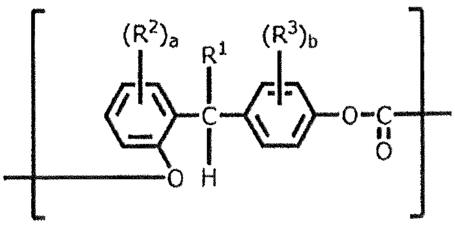

(1 8)

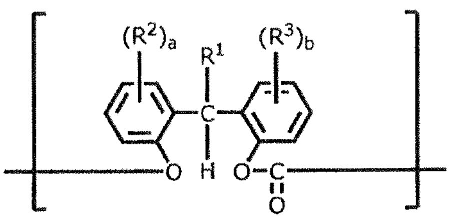

(1 9)

From such a point of view, more preferred specific examples of the carbonate structure (A) include the structural

units represented by the following Formulae (20) to (29). Among these, the structural units of Formulae (20) to (27) are more preferred; the structural units of Formulae (21) to (24) are still more preferred; the structural units of Formulae (21) and (23) are especially preferred; and the structural unit of Formula (23) is most preferred.

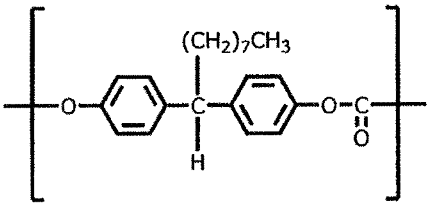

(2 0)

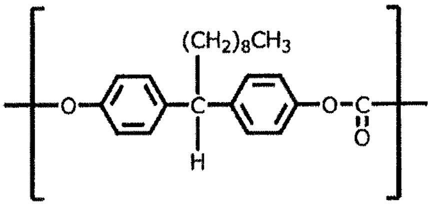

(2 1)

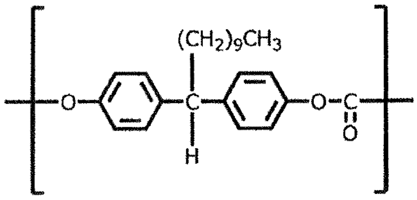

(2 2)

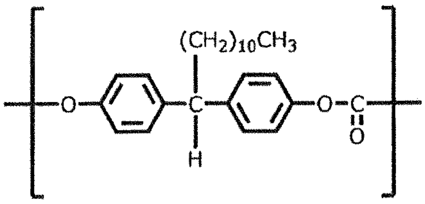

(2 3)

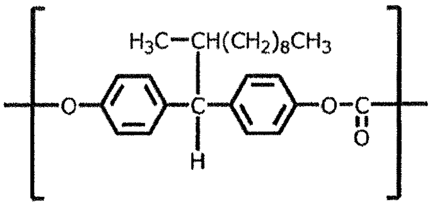

(2 4)

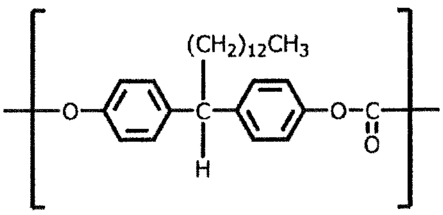

(2 5)

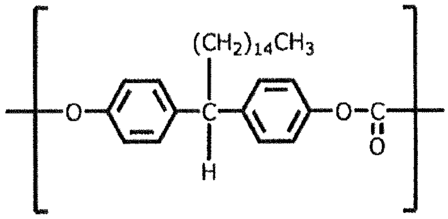

(26)

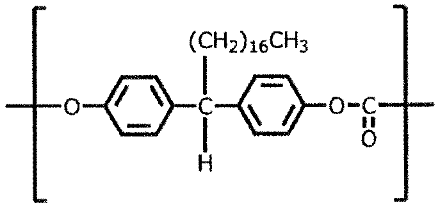

(27)

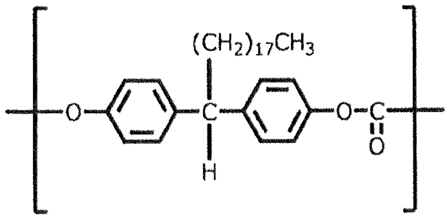

(28)

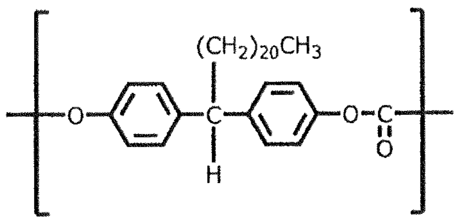

(29)

The carbonate structural unit (B) included in the aromatic polycarbonate copolymer contained in the fluidity modifier for thermoplastic resin of the present invention is preferably the bisphenol A-derived structural unit represented by the following Formula (2). However, the isomeric structural unit represented by Formula (31) may also be included at an arbitrary ratio. By the inclusion of such a carbonate structural unit (B), when a thermoplastic resin is blended with the aromatic polycarbonate copolymer contained in the fluidity modifier for thermoplastic resin of the present invention, compatibility and dispersibility can be increased, and favorable mechanical properties can be obtained.

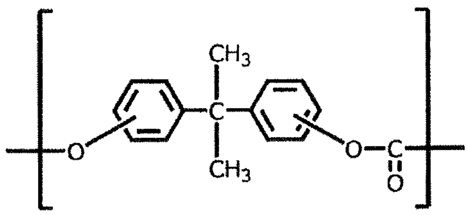

(2)

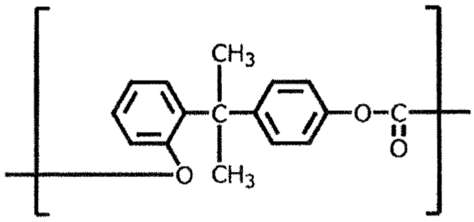

(31)

As long as the effect of the present invention is not inhibited, the aromatic polycarbonate copolymer contained in the fluidity modifier for thermoplastic resin of the present invention may be either a copolymer composed only of the carbonate structural unit (A) and the carbonate structural unit (B) described above, or a copolymer containing one or more kinds of carbonate structural units each derived from another dihydroxy compound different from the carbonate structural unit (A) and the carbonate structural unit (B). In terms of the form of the copolymer, various forms of copolymers including random copolymers and block copolymers may be selected.

In the aromatic polycarbonate copolymer contained in the fluidity modifier for thermoplastic resin of the present invention, the ratio of the carbonate structural unit (A) to the total carbonate structural units in the aromatic polycarbonate copolymer is more than 10 mol% and not more than 36.5 mol%. As described above, the carbonate structural unit (A) acts as a unit that moderately inhibits tangling of polymer chains to reduce friction between the polymer chains, thereby giving a fluidity-imparting effect. The carbonate structural unit (B) acts as a unit that gives compatibility and heat resistance to the thermoplastic resin, and also acts to increase the thermal stability of the aromatic polycarbonate copolymer contained in the fluidity modifier for thermoplastic resin of the present invention. Thus, the ratio between the carbonate structural unit (A) and the carbonate structural unit (B) is important for efficiently giving the fluidity-improving effect upon inclusion of the aromatic polycarbonate copolymer of the present invention in the thermoplastic resin, and for increasing dispersibility of the aromatic polycarbonate copolymer in the thermoplastic resin so as to suppress deterioration of physical properties such as mechanical properties, thermal properties, and transparency as much as possible. In cases where the ratio of the carbonate structural unit (A) is not more than the lower limit of the above-described range, when the copolymer is included in the thermoplastic resin, the fluidity-modifying effect may be insufficient, and, compared to thermoplastic resins having the same viscosity, the impact strength may be low, which is not preferred. On the other hand, in cases where the ratio is not less than the upper limit of the above-described range, when the copolymer is included in the thermoplastic resin, the mechanical strength may be low, and the thermal properties and the transparency may be remarkably low, which is not preferred.

The ratio of the carbonate structural unit (A) to the total carbonate structural units in the aromatic polycarbonate copolymer is defined as follows: 100 × (the number of moles of the monomers constituting the carbonate structural unit (A) / the total number of moles of bisphenol constituting the total carbonate structural units).

From such a point of view, the ratio of the carbonate structural unit (A) is preferably not less than 12 mol%, more preferably not less than 14 mol%, still more preferably not less than 16 mol%, especially preferably not less than 18 mol%, most preferably not less than 22 mol%. Further, the ratio is preferably not more than 36.0 mol%, more preferably not more than 35.0 mol%, still more preferably not more than 34.5 mol%, especially preferably not more than 34.0 mol%, most preferably not more than 33.0 mol%.

In cases where the aromatic polycarbonate copolymer contains a carbonate structural unit derived from another dihydroxy compound, the content of this carbonate structural unit in the copolymer is not limited as long as the effect of the fluidity modifier of the present invention is not inhibited. For example, the ratio of the carbonate structural unit derived from another dihydroxy compound to the total carbonate structural units is usually 0 to 70 mol%, preferably 0 to 50 mol%, more preferably 0 to 40 mol%, still more preferably 0 to 30 mol%, especially preferably 0 to 20 mol%, most preferably 0 to 10 mol%.

Flow Value (Q Value) of Aromatic Polycarbonate Copolymer

The melt viscosity of the aromatic polycarbonate copolymer contained in the fluidity modifier for thermoplastic resin of the present invention is not limited, and may be appropriately selected depending on the viscosity of the thermoplastic resin in which the fluidity modifier is to be included and the desired viscosity of the thermoplastic resin composition. Usually, the melt viscosity is not less than 1 (unit: $10^{-2}$ $cm^3$/sec.) in terms of the flow value (Q value) measured using a Koka flow tester according to Appendix C of JIS (1999) K7210 at 240°C at 160 kgf/$cm^2$. The Q value is an index of the melt viscosity. A higher Q value indicates a lower viscosity and a better fluidity. The Q value may be not less than 6, or may be not less than 20. It is preferably not less than 30, more preferably not less than 40. On the other hand, the upper limit of the Q value of the aromatic polycarbonate copolymer of the present invention is not limited as long as the excellent physical properties of the thermoplastic resin composition of the present invention are not deteriorated. The Q value is usually not more than 150, preferably not more than 120, more preferably not more than 100, still more preferably not more than 80, especially preferably not more than 60.

The Q value of the aromatic polycarbonate copolymer contained in the fluidity modifier for thermoplastic resin of the present invention is influenced by physical properties such as the types and the ratios of the carbonate structural unit (A) and the carbonate structural unit (B) described above and the molecular weight of the aromatic polycarbonate copolymer. Those skilled in the art can easily obtain an arbitrary Q value by controlling these physical properties.

Glass Transition Temperature (Tg) of Aromatic_

Polycarbonate Copolymer

The glass transition temperature (Tg) of the aromatic polycarbonate copolymer contained in the fluidity modifier for thermoplastic resin of the present invention is not limited, and may be appropriately selected and used. The glass transition temperature is usually 25°C to 135°C. In cases where the glass transition temperature (Tg) is less than the lower limit, the fluidity modifier for thermoplastic resin of the present invention may be in a liquid state, and bleed-out may occur when it is included in a thermoplastic resin, which is not preferred. On the other hand, in cases where the glass transition temperature (Tg) exceeds the upper limit, the fluidity-modifying effect of the fluidity modifier for thermoplastic resin of the present invention is low, so that the processing temperature of the thermoplastic resin composition tends to be high, which is not preferred. The glass transition temperature (Tg) of the aromatic polycarbonate copolymer contained in the fluidity modifier for thermoplastic resin of the present invention is preferably not less than 30°C, more preferably not less than 35°C, still more preferably not less than 40°C, especially preferably not less than 50°C. On the other hand, the glass transition temperature is preferably not more than 130°C, more preferably not more than 120°C, still more preferably not more than 110°C, especially preferably not more than 100°C.

The glass transition temperature (Tg) of the aromatic polycarbonate copolymer contained in the fluidity modifier for thermoplastic resin of the present invention means the extrapolated glass transition temperature determined as follows. Using a differential scanning calorimeter (DSC 6220, manufactured by SII), about 10 mg of an aromatic polycarbonate copolymer sample is heated at a heating rate of 20°C/min. while measuring the amount of heat. According to JIS-K7121, a straight line is drawn by extending the base line in the low-temperature side toward the high-temperature side, and a tangent line is drawn at the point where the slope of the curve becomes maximum in the portion showing the stepwise change due to glass transition. The temperature at the intersection of these lines corresponds to the extrapolated glass transition temperature.

The glass transition temperature (Tg) of the aromatic polycarbonate copolymer contained in the fluidity modifier for thermoplastic resin of the present invention is also influenced by physical properties such as the types and the ratios of the carbonate structural unit (A) and the carbonate structural unit (B) described above and the molecular weight of the aromatic polycarbonate copolymer. Those skilled in the art can easily obtain an aromatic polycarbonate copolymer having an arbitrary glass transition temperature by controlling these physical properties.

Molecular Weight of Aromatic Polycarbonate Copolymer

The molecular weight of the aromatic polycarbonate copolymer contained in the fluidity modifier for thermoplastic resin of the present invention is not limited, and usually 5000 to 50,000 in terms of the viscosity average molecular weight (Mv) as calculated from the solution viscosity. In cases where the viscosity average molecular weight is less than the lower limit, the mechanical properties of the thermoplastic resin composition of the present invention are likely to be poor, and the aromatic polycarbonate copolymer tends to cause bleeding. In cases where the viscosity average molecular weight exceeds the upper limit, the fluidity tends to be insufficient, which is not preferred. From such a point of view, the viscosity average molecular weight (Mv) of the aromatic polycarbonate copolymer in the present invention is preferably not less than 9000, more preferably not less than 10,000, still more preferably not less than 11,000, and preferably not more than 30,000, more preferably not more than 25,000, still more preferably not more than 20,000, especially preferably not more than 18,000.

When the viscosity average molecular weight of the aromatic polycarbonate copolymer contained in the fluidity modifier for thermoplastic resin is controlled to within the range described above, two or more kinds of aromatic polycarbonate copolymers having different viscosity average molecular weights may be mixed and used. In such a case, the viscosity average molecular weight (Mv) of the aromatic polycarbonate copolymer of the present invention may be controlled by mixing an aromatic polycarbonate copolymer having a viscosity average molecular weight outside the above-described preferred range.

The viscosity average molecular weight (Mv) of the aromatic polycarbonate copolymer contained in the fluidity modifier for thermoplastic resin of the present invention of the present invention means a value calculated by determining the intrinsic viscosity (limiting viscosity) [η] (unit, dL/g) at a temperature of 20°C using an Ubbelohde viscometer with methylene chloride as a solvent, and applying the determined value to the Schnell's viscosity equation, that is, $\eta=1.23\times10^{-4}\,Mv^{0.83}$. The intrinsic viscosity (limiting viscosity) [η] is a value calculated by measuring the specific viscosity [ηsp] at each solution concentration [C] (g/dL) and applying the measured value to the following equation.

$$\eta = \lim_{c\to 0} \eta_{sp}/c$$

Amount of Terminal Hydroxyl Groups in Aromatic

Polycarbonate Copolymer

The amount of terminal hydroxyl groups in the aromatic polycarbonate copolymer contained in the fluidity modifier for thermoplastic resin of the present invention is not limited, and usually 10 to 2000 ppm. The amount of terminal hydroxyl groups is preferably not less than 20 ppm, more preferably not less than 50 ppm, still more preferably not less than 100 ppm. On the other hand, the amount of terminal hydroxyl groups is preferably not more than 1500 ppm, more preferably not more than 1000 ppm, still more preferably not more than 700 ppm. In cases where the amount of terminal hydroxyl groups is not less than the lower limit of this range, the hue and the productivity of the fluidity modifier for thermoplastic resin of the present invention can be improved, and moreover, the hue of the thermoplastic resin composition containing the fluidity modifier for thermoplastic resin of the present invention can be improved. In cases where the amount of terminal hydroxyl groups is not more than the upper limit, the thermal stabilities and the moist heat stabilities of the fluidity modifier for thermoplastic resin and the thermoplastic resin composition of the present invention can be further improved.

The amount of terminal hydroxyl groups in the aromatic polycarbonate copolymer contained in the fluidity modifier for thermoplastic resin of the present invention can be adjusted to within the range described above by an arbitrary known method. For example, in cases where the aromatic polycarbonate copolymer is produced by polycondensation by transesterification reaction, the amount of terminal hydroxyl groups can be adjusted to within the above-described range by adjusting the mixing ratio between the carbonate ester and the dihydroxy compounds, the degree of pressure reduction during the transesterification reaction, and/or the like.

Examples of more positive control methods include a method in which a terminating agent is separately mixed during the reaction of the aromatic polycarbonate copolymer. Examples of the terminating agent in this process include monohydric phenols, monovalent carboxylic acids, and diester carbonates. A single type of terminating agent may be used, or two or more types of terminating agents may be used in an arbitrary combination at arbitrary ratios.

In cases where the aromatic polycarbonate copolymer contained in the fluidity modifier for thermoplastic resin of the present invention is produced by interfacial polymerization, the amount of terminal hydroxyl groups can be arbitrarily adjusted by adjusting the amount of a molecular weight modifier (terminating agent) included.

The terminal hydroxyl group concentration is represented by the mass, expressed in ppm units, of the terminal hydroxyl groups with respect to the mass of the aromatic polycarbonate copolymer. For its measurement, colorimetry by the titanium tetrachloride/acetic acid method (the method described in Macromol. Chem. 88 215 (1965)) is used. In an aromatic polycarbonate copolymer composed of a plurality of dihydroxy compounds, the corresponding dihydroxy compounds are mixed depending on the copolymerization ratio, and samples with at least three levels of concentrations are provided. A calibration curve is then drawn with the data obtained at the three or more points, and the amount of terminal hydroxyl groups in the aromatic polycarbonate copolymer is measured thereafter. The detection wavelength is 546 nm.

Method for Producing Aromatic Polycarbonate Copolymer

The aromatic polycarbonate copolymer contained in the fluidity modifier for thermoplastic resin of the present invention is obtained by polycondensation of dihydroxy compounds including an aromatic dihydroxy compound necessary for forming the carbonate structural unit (A), an aromatic dihydroxy compound necessary for forming the carbonate structural unit (B), and another dihydroxy compound optionally selected; with a carbonate-forming compound.

Examples of the aromatic dihydroxy compound necessary for forming the carbonate structural unit (A) include the aromatic dihydroxy compounds represented by the following Formula (32).

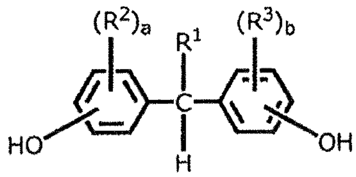

(3 2)

Specific examples of the aromatic dihydroxy compound necessary for forming the carbonate structural unit (A) include the aromatic dihydroxy compounds represented by the following Formulae (33) to (35). Among these, the aromatic dihydroxy compounds represented by Formula (33) are more preferred since they tend to increase the thermal stability. However, the aromatic dihydroxy compounds of Formulae (34) and (35) may also included at arbitrary ratios.

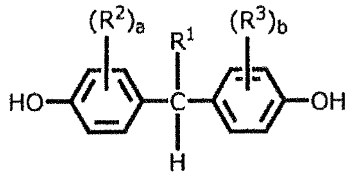

(3 3)

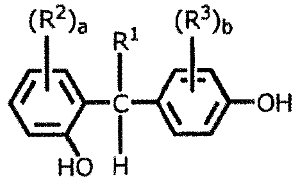

(3 4)

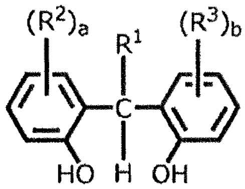

(3 5)

In Formulae (32) to (35), the definitions and preferred examples of $R^1$, $R^2$, $R^3$, a, and b are the same as those described for Formula (1) of the carbonate structural unit (A).

From such a point of view, more preferred specific examples of the aromatic dihydroxy compound necessary for forming the carbonate structural unit (A) include the following:

1,1-bis(4-hydroxyphenyl)nonane, 1,1-bis(2-hydroxyphenyl)nonane, 1-(2-hydroxyphenyl)-1-(4-hydroxyphenyl)nonane, 1,1-bis(4-hydroxyphenyl)decane, 1,1-bis(2-hydroxyphenyl)decane, 1-(2-hydroxyphenyl)-1-(4-hydroxyphenyl)decane, 1,1-bis(4-hydroxyphenyl)undecane, 1,1-bis(2-hydroxyphenyl)undecane, 1-(2-hydroxyphenyl)-1-(4-hydroxyphenyl)undecane, 1,1-bis(4-hydroxyphenyl)dodecane, 1,1-bis(2-hydroxyphenyl)dodecane, 1-(2-hydroxyphenyl)-1-(4-hydroxyphenyl)dodecane, 1,1-bis(4-hydroxyphenyl)tridecane, 1,1-bis(2-hydroxyphenyl)tridecane, 1-(2-hydroxyphenyl)-1-(4-hydroxyphenyl)tridecane, 1,1-bis(4-hydroxyphenyl)tetradecane, 1,1-bis(2-hydroxyphenyl)tetradecane, 1-(2-hydroxyphenyl)-1-(4-hydroxyphenyl)tetradecane, 1,1-bis(4-hydroxyphenyl)pentadecane, 1,1-bis(2-hydroxyphenyl)pentadecane, 1-(2-hydroxyphenyl)-1-(4-hydroxyphenyl)pentadecane, 1,1-bis(4-hydroxyphenyl)hexadecane, 1,1-bis(2-hydroxyphenyl)hexadecane, 1-(2-hydroxyphenyl)-1-(4-hydroxyphenyl)hexadecane, 1,1-bis(4-hydroxyphenyl)heptadecane, 1,1-bis(2-hydroxyphenyl)heptadecane, 1-(2-hydroxyphenyl)-1-(4-hydroxyphenyl)heptadecane, 1,1-bis(4-hydroxyphenyl)octadecane, 1,1-bis(2-hydroxyphenyl)octadecane, 1-(2-hydroxyphenyl)-1-(4-hydroxyphenyl)octadecane, 1,1-bis(4-hydroxyphenyl)nonadecane, 1,1-bis(2-hydroxyphenyl)nonadecane, 1-(2-hydroxyphenyl)-1-(4-hydroxyphenyl)nonadecane, 1,1-bis(4-hydroxyphenyl)icosane, 1,1-bis(2-hydroxyphenyl)icosane, 1-(2-hydroxyphenyl)-1-(4-hydroxyphenyl)icosane, 1,1-bis(4-hydroxyphenyl)henicosane, 1,1-bis(2-hydroxyphenyl)henicosane, 1-(2-hydroxyphenyl)-1-(4-hydroxyphenyl)henicosane, 1,1-bis(4-hydroxyphenyl)docosane, 1,1-bis(2-hydroxyphenyl)docosane, 1-(2-hydroxyphenyl)-1-(4-hydroxyphenyl)docosane, 1,1-bis(4-hydroxyphenyl)tricosane, 1,1-bis(2-hydroxyphenyl)tricosane, 1-(2-hydroxyphenyl)-1-(4-hydroxyphenyl)tricosane, 1,1-bis(4-hydroxyphenyl)tetracosane, 1,1-bis(2-hydroxyphenyl)tetracosane, 1-(2-hydroxyphenyl)-1-(4-hydroxyphenyl)tetracosane, 1,1-bis(3-methyl-4-hydroxyphenyl)nonane, 1,1-bis(2-hydroxy-3-methylphenyl)nonane, 1-(2-hydroxy-3-methyl-phenyl)-1-(3-methyl-4-hydroxyphenyl)nonane, 1,1-bis(3-methyl-4-hydroxyphenyl)decane, 1,1-bis(2-hydroxy-3-methylphenyl)decane, 1-(2-hydroxy-3-methyl-phenyl)-1-(3-methyl-4-hydroxyphenyl)decane, 1,1-bis(3-methyl-4-hydroxyphenyl)undecane, 1,1-bis(2-hydroxy-3-methylphenyl)undecane, 1-(2-hydroxy-3-methylphenyl)-1-(3-methyl-4-hydroxyphenyl)undecane, 1,1-bis(3-methyl-4-hydroxyphenyl)dodecane, 1,1-bis(2-hydroxy-3-methylphenyl)dodecane, 1-(2-hydroxy-3-methyl-phenyl)-1-(3-methyl-4-hydroxyphenyl)dodecane, 1,1-bis(3-methyl-4-hydroxyphenyl)tridecane, 1,1-bis(2-hydroxy-3-methylphenyl)tridecane, 1-(2-hydroxy-3-methyl-phenyl)-1-(3-methyl-4-hydroxyphenyl)tridecane, 1,1-bis(3-methyl-4-hydroxyphenyl)tetradecane, 1,1-bis(2-hydroxy-3-methylphenyl)tetradecane, 1-(2-hydroxy-3-methyl-phenyl)-1-(3-methyl-4-hydroxyphenyl)tetradecane, 1,1-bis(3-methyl-4-hydroxyphenyl)pentadecane, 1,1-bis(2-hydroxy-3-methylphenyl)pentadecane, 1-(2-hydroxy-3-methyl-phenyl)-1-(3-methyl-4-hydroxyphenyl)pentadecane, 1,1-bis(3-methyl-4-hydroxyphenyl)hexadecane, 1,1-bis(2-hydroxy-3-methylphenyl)hexadecane, 1-(2-hydroxy-3-methyl-phenyl)-1-(3-methyl-4-hydroxyphenyl)hexadecane, 1,1-bis(3-methyl-4-hydroxyphenyl)heptadecane, 1,1-bis(2-hydroxy-3-methylphenyl)heptadecane, 1-(2-hydroxy-3-methyl-phenyl)-1-(3-methyl-4-hydroxyphenyl)heptadecane, 1,1-bis(3-methyl-4-hydroxyphenyl)octadecane, 1,1-bis(2-hydroxy-3-methylphenyl)octadecane, 1-(2-hydroxy-3-methyl-phenyl)-1-(3-methyl-4-hydroxyphenyl)octadecane, 1,1-bis(3-methyl-4-hydroxyphenyl)nonadecane,
1,1-bis(2-hydroxy-3-methylphenyl)nonadecane, 1-(2-hydroxy-3-methyl-phenyl)-1-(3-methyl-4-hydroxyphenyl)nonadecane, 1,1-bis(3-methyl-4-hydroxyphenyl)icosane, 1,1-bis(2-hydroxy-3-methylphenyl)icosane, 1-(2-hydroxy-3-methyl-phenyl)-1-(3-methyl-4-hydroxyphenyl)icosane, 1,1-bis(3-methyl-4-hydroxyphenyl)henicosane, 1,1-bis(2-hydroxy-3-methylphenyl)henicosane, 1-(2-hydroxy-3-methyl-phenyl)-1-(3-methyl-4-hydroxyphenyl)henicosane, 1,1-bis(3-methyl-4-hydroxyphenyl)docosane, 1,1-bis(2-hydroxy-3-methylphenyl)docosane, 1-(2-hydroxy-3-methyl-phenyl)-1-(3-methyl-4-hydroxyphenyl)docosane, 1,1-bis(3-methyl-4-hydroxyphenyl)tricosane, 1,1-bis(2-hydroxy-3-methylphenyl)tricosane, 1-(2-hydroxy-3-methyl-phenyl)-1-(3-methyl-4-hydroxyphenyl)tricosane, 1,1-bis(3-methyl-4-hydroxyphenyl)tetracosane, 1,1-bis(2-hydroxy-3-methylphenyl)tetracosane, 1-(2-hydroxy-3-methyl-phenyl)-1-(3-methyl-4-hydroxyphenyl)tetracosane, 1,1-bis(3,5-dimethyl-4-hydroxyphenyl)octane, 1,1-bis(3,5-dimethyl-4-hydroxyphenyl)nonane, 1,1-bis(3,5-dimethyl-4-hydroxyphenyl)decane, 1,1-bis(3,5-dimethyl-4-hydroxyphenyl)undecane, 1,1-bis(3,5-dimethyl-4-hydroxyphenyl)dodecane, 1,1-bis(3,5-dimethyl-4-hydroxyphenyl)tridecane, 1,1-bis(3,5-dimethyl-4-hydroxyphenyl)tetradecane, 1,1-bis(3-ethyl-4-hydroxyphenyl)nonane, 1,1-bis(3-ethyl-4-hydroxyphenyl)decane, 1,1-bis(3-ethyl-4-hydroxyphenyl)undecane, 1,1-bis(3-ethyl-4-hydroxyphenyl)dodecane, 1,1-bis(3-propyl-4-hydroxyphenyl)nonane, 1,1-bis(3-propyl-4-hydroxyphenyl)decane, 1,1-bis(3-propyl-4-hydroxyphenyl)undecane, 1,1-bis(3-propyl-4-hydroxyphenyl)dodecane, 1,1-bis(3-butyl-4-hydroxyphenyl)nonane, 1,1-bis(3-butyl-4-hydroxyphenyl)decane, 1,1-bis(3-butyl-4-hydroxyphenyl)undecane, 1,1-bis(3-butyl-4-hydroxyphenyl)dodecane, 1,1-bis(3-nonyl-4-hydroxyphenyl)nonane, 1,1-bis(3-nonyl-4-hydroxyphenyl)decane, 1,1-bis(3-nonyl-4-hydroxyphenyl)undecane, and 1,1-bis(3-nonyl-4-hydroxyphenyl)dodecane.

Among these, from the viewpoint of the thermal stability, hue, and impact strength, the aromatic dihydroxy compound necessary for forming the carbonate structural unit (A) of the aromatic polycarbonate copolymer contained in the fluidity modifier for thermoplastic resin of the present invention is more preferably 1,1-bis(4-hydroxyphenyl)nonane, 1,1-bis(4-hydroxyphenyl)decane, 1,1-bis(4-hydroxyphenyl)undecane, 1,1-bis(4-hydroxyphenyl)dodecane, 1,1-bis(4-hydroxyphenyl)tridecane, 1,1-bis(4-hydroxyphenyl)tetradecane, 1,1-bis(4-hydroxyphenyl)pentadecane, 1,1-bis(4-hydroxyphenyl)hexadecane, 1,1-bis(4-hydroxyphenyl)heptadecane, 1,1-bis(4-hydroxyphenyl)octadecane, or 1,1-bis(4-hydroxyphenyl)nonadecane, still more preferably 1,1-bis(4-hydroxyphenyl)decane, 1,1-bis(4-hydroxyphenyl)undecane, 1,1-bis(4-hydroxyphenyl)dodecane, or 1,1-bis(4-hydroxyphenyl)tridecane, most preferably 1,1-bis(4-hydroxyphenyl)dodecane.

Specific examples of the aromatic dihydroxy compound necessary for forming the carbonate structural unit (B) include 2,2-bis(4-hydroxyphenyl)propane, 2,2-bis(2-hydroxyphenyl)propane, and 2-(2-hydroxyphenyl)-2-(4-hydroxyphenyl)propane. Among these, from the viewpoint of the thermal stability, hue, and impact strength, 2,2-bis(4-hydroxyphenyl)propane (the so-called bisphenol A) is more preferred.

The other dihydroxy compound, which is different from the aromatic dihydroxy compound necessary for forming the carbonate structural unit (A) and the aromatic dihydroxy compound necessary for forming the carbonate structural unit (B), is not limited, and may be either an aromatic dihydroxy compound having an aromatic ring in the molecular skeleton, or an aliphatic dihydroxy compound having no aromatic ring. Further, the other dihydroxy compound may be a dihydroxy compound in which a hetero atom(s) such as N (nitrogen), S (sulfur), P (phosphorus), and/or Si (silicon), and/or a hetero-bond(s), is/are introduced for giving various properties.

From the viewpoint of the heat resistance, thermal stability, and strength, the other dihydroxy compound preferably used is an aromatic dihydroxy compound. Specific examples of such an aromatic dihydroxy compound include the following:
dihydroxybenzenes such as 1,2-dihydroxybenzene, 1,3-dihydroxybenzene (that is, resorcinol), and 1,4-dihydroxybenzene; dihydroxybiphenyls such as 2,5-dihydroxybiphenyl, 2,2'-dihydroxybiphenyl, and 4,4'-dihydroxybiphenyl; dihydroxynaphthalenes such as 2,2'-dihydroxy-1,1'-binaphthyl, 1,2-dihydroxynaphthalene, 1,3-dihydroxynaphthalene, 2,3-dihydroxynaphthalene, 1,6-dihydroxynaphthalene, 2,6-dihydroxynaphthalene, 1,7-dihydroxynaphthalene, and 2,7-dihydroxynaphthalene; dihydroxydiaryl ethers such as 2,2'-dihydroxydiphenyl ether, 3,3'-dihydroxydiphenyl ether, 4,4'-dihydroxydiphenyl ether, 4,4'-dihydroxy-3,3'-dimethyldiphenyl ether, 1,4-bis(3-hydroxyphenoxy)benzene, and 1,3-bis(4-hydroxyphenoxy)benzene; bis(hydroxyaryl)alkanes such as 1,1-bis(4-hydroxyphenyl)propane, 2,2-bis(3-methyl-4-hydroxyphenyl)propane, 2,2-bis(3-methoxy-4-hydroxyphenyl)propane, 2-(4-hydroxyphenyl)-2-(3-methoxy-4-hydroxyphenyl)propane, 1,1-bis(3-tert-butyl-4-hydroxyphenyl)propane, 2,2-bis(3,5-dimethyl-4-hydroxyphenyl)propane, 2,2-bis(3-cyclohexyl-4-hydroxyphenyl)propane, 2-(4-hydroxyphenyl)-2-(3-cyclohexyl-4-hydroxyphenyl)propane, $\alpha,\alpha'$-bis(4-hydroxyphenyl)-1,4-diisopropylbenzene, 1,3-bis[2-(4-hydroxyphenyl)-2-propyl]benzene, 4,4-dihydroxydiphenylmethane, bis(4-hydroxyphenyl)cyclohexylmethane, bis(4-hydroxyphenyl)phenylmethane, bis(4-hydroxyphenyl)(4-propenylphenyl)methane, bis(4-hydroxyphenyl)diphenylmethane, bis(4-hydroxyphenyl)naphthylmethane, 1,1-bis(4-hydroxyphenyl)ethane, 1,1-bis(4-hydroxyphenyl)-1-phenylethane, 1,1-bis(4-hydroxyphenyl)-1-naphthylethane, 1,1-bis(4-hydroxyphenyl)butane, 2,2-bis(4-hydroxyphenyl)butane, 2,2-bis(4-hydroxyphenyl)pentane, 2,2-bis(4-hydroxyphenyl)hexane, 2,2-bis(4-hydroxyphenyl)octane, 2,2-bis(4-hydroxyphenyl)hexane, 4,4-bis(4-hydroxyphenyl)heptane, and 2,2-bis(4-hydroxyphenyl)nonane; bis(hydroxyaryl)cycloalkanes such as 1,1-bis(4-hydroxyphenyl)cyclopentane, 1,1-bis(4-hydroxyphenyl)cyclohexane, 1,1-bis(4-hydroxyphenyl)-3,3-dimethylcyclohexane, 1,1-bis(4-hydroxyphenyl)-3,4-dimethylcyclohexane, 1,1-bis(4-hydroxyphenyl)-3,5-dimethylcyclohexane, 1,1-bis(4-hydroxyphenyl)-3,3,5-trimethylcyclohexane, 1,1-bis(4-hydroxy-3,5-dimethylphenyl)-3,3,5-trimethylcyclohexane, 1,1-bis(4-hydroxyphenyl)-3-propyl-5-methylcyclohexane, 1,1-bis(4-hydroxyphenyl)-3-tert-butyl-cyclohexane, 1,1-bis(4-hydroxyphenyl)-4-tert-butyl-cyclohexane, 1,1-bis(4-hydroxyphenyl)-3-phenylcyclohexane, and 1,1-bis(4-hydroxyphenyl)-4-phenylcyclohexane; cardo structure-containing bisphenols such as 9,9-bis(4-hydroxyphenyl)fluorene and 9,9-bis(4-hydroxy-3-methylphenyl)fluorene; dihydroxydiaryl sulfides such as 4,4'-dihydroxydiphenyl sulfide and 4,4'-dihydroxy-3,3'-dimethyldiphenyl sulfide; dihydroxydiaryl sulfoxides such as 4,4'-dihydroxydiphenyl sulfoxide and 4,4'-dihydroxy-3,3'-dimethyldiphenyl sulfoxide; and dihydroxydiaryl sulfones such as 4,4'-dihydroxydiphenyl sulfone and 4,4'-dihydroxy-3,3'-dimethyldiphenyl sulfone.

A single type of aromatic dihydroxy compound may be used, or two or more types of aromatic dihydroxy compounds may be used in an arbitrary combination at arbitrary ratios.

As the other dihydroxy compound described above, the following aliphatic dihydroxy compounds may also be used depending on the purpose. Specific examples of such aliphatic dihydroxy compounds include the following:

alkanediols such as ethane-1,2-diol, propane-1,2-diol, propane-1,3-diol, 2,2-dimethylpropane-1,3-diol, 2-methyl-2-propylpropane-1,3-diol, butane-1,4-diol, pentane-1,5-diol, hexane-1,6-diol, and decane-1,10-diol; cycloalkanediols such as cyclopentane-1,2-diol, cyclohexane-1,2-diol, cyclohexane-1,4-diol, 1,4-cyclohexanedimethanol, 4-(2-hydroxyethyl)cyclohexanol, and 2,2,4,4-tetramethyl-cyclobutane-1,3-diol; glycols such as ethylene glycol, 2,2'-oxydiethanol (that is, diethylene glycol), triethylene glycol, propylene glycol, and spiroglycol; aralkyldiols such as1,2-benzenedimethanol, 1,3-benzenedimethanol, 1,4-benzenedimethanol, 1,4-benzenediethanol, 1,3-bis(2-hydroxyethoxy)benzene, 1,4-bis(2-hydroxyethoxy)benzene, 2,3-bis(hydroxymethyl)naphthalene, 1,6-bis(hydroxyethoxy)naphthalene, 4,4'-biphenyldimethanol, 4,4'-biphenyldiethanol, 1,4-bis(2-hydroxyethoxy)biphenyl, bisphenol A bis(2-hydroxyethyl)ether, and bisphenol S bis (2-hydroxyethyl)ether; cyclic ethers such as 1,2-epoxyethane (that is, ethylene oxide), 1,2-epoxypropane (that is, propylene oxide), 1,2-epoxycyclopentane, 1,2-epoxycyclohexane, 1,4-epoxycyclohexane, 1-methyl-1,2-epoxycyclohexane, 2,3-epoxynorbornane, and 1,3-epoxypropane; and oxygen-containing heterocyclic dihydroxy compounds such as isosorbide, isomannide, and isoidide.

A single type of aliphatic dihydroxy compound may be used, or two or more types of aliphatic dihydroxy compounds may be used in an arbitrary combination at arbitrary ratios. Examples of the carbonate-forming compound include carbonyl halides and carbonate esters. A single type of carbonate-forming compound may be used, or two or more types of carbonate-forming compounds may be used in an arbitrary combination at arbitrary ratios.

Specific examples of the carbonyl halides include phosgene; haloformates such as bischloroformate bodies of dihydroxy compounds, and monochloroformate bodies of dihydroxy compounds.

Specific examples of the carbonate esters include the compounds represented by the following Formula (36), for example, aryl carbonates; dialkyl carbonates; biscarbonate bodies of dihydroxy compounds; monocarbonate bodies of dihydroxy compounds; and carbonate bodies of dihydroxy compounds such as cyclic carbonates.

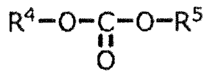

(3 6)

In Formula (36), $R^4$ and $R^5$ each independently represent $C_1$-$C_{30}$ alkyl, aryl, or arylalkyl group. Hereinafter, when $R^4$ and $R^5$ are alky and/or arylalkyl, the carbonate ester may be referred to as dialkyl carbonate, and when $R^4$ and $R^5$ are aryl, the carbonate ester may be referred to as diaryl carbonate. In particular, from the viewpoint of reactivity with the dihydroxy compounds, both $R^4$ and $R^5$ are preferably aryl. The carbonate ester is more preferably a diaryl carbonate represented by the following Formula (37).

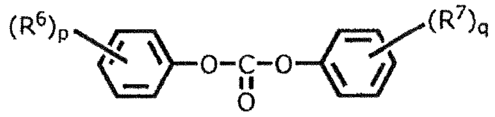

(3 7)

In Formula (37), $R^6$ and $R^7$ each independently represent a halogen atom, nitro, cyano, $C_1$-$C_{20}$ alkyl, $C_1$-$C_{20}$ alkoxycarbonyl, $C_4$-$C_{20}$ cycloalkyl, or $C_6$-$C_{20}$ aryl, and p and q each independently represent an integer of 0 to 5.

Specific examples of such a carbonate ester include dialkyl carbonates such as dimethyl carbonate, diethyl carbonate, and di-t-butyl carbonate; and (substituted) diaryl carbonates such as diphenyl carbonate (which may be

hereinafter referred to as "DPC"), bis(4-methylphenyl)carbonate, bis(4-chlorophenyl)carbonate, bis(4-fluorophenyl)carbonate, bis(2-chlorophenyl)carbonate, bis(2,4-difluorophenyl)carbonate, bis(4-nitrophenyl)carbonate, bis(2-nitrophenyl)carbonate, bis(methylsalicylphenyl)carbonate, and ditolyl carbonate. Among these, diphenyl carbonate is preferred. These carbonate esters may be used individually, or two or more of these may be used as a mixture.

Preferably not more than 50 mol%, more preferably not more than 30 mol% of the carbonate ester may be substituted with a dicarboxylic acid(s) and/or dicarboxylic acid ester(s). Representative examples of the dicarboxylic acid(s) and/or dicarboxylic acid ester(s) include terephthalic acid, isophthalic acid, diphenyl terephthalate, and diphenyl isophthalate. In cases of substitution with such a dicarboxylic acid(s) and/or dicarboxylic acid ester(s), a polyester carbonate is obtained.

The aromatic polycarbonate copolymer contained in the fluidity modifier for thermoplastic resin of the present invention can be produced by a conventionally known polymerization method, and the polymerization method is not limited. Examples of the polymerization method include interfacial polymerization, melt transesterification, pyridine method, ring-opening polymerization of cyclic carbonate compounds, and solid-phase transesterification of prepolymers. Methods especially preferred among these are concretely described below.

Interfacial Polymerization

First, a case where the aromatic polycarbonate copolymer contained in the fluidity modifier for thermoplastic resin of the present invention is produced by interfacial polymerization is described. In the interfacial polymerization, the pH is usually maintained at not less than 9 in the presence of an organic solvent inert to the reaction, and an aqueous alkali solution. After reacting the material dihydroxy compounds with the carbonate-forming compound (preferably phosgene), interfacial polymerization is carried out in the presence of a polymerization catalyst to obtain an aromatic polycarbonate copolymer. If necessary, in the reaction system, a molecular weight modifier (terminating agent) may be allowed to be present, and, for prevention of oxidation of the dihydroxy compounds, an antioxidant may be allowed to present.

The material dihydroxy compounds and the carbonate-forming compound are as described above. Among carbonate-forming compounds, phosgene is preferably used. In cases where phosgene is used, the method is specifically called the phosgene method.

Examples of the organic solvent inert to the reaction include, but are not limited to, chlorinated hydrocarbons such as dichloromethane, 1,2-dichloroethane, chloroform, monochlorobenzene, and dichlorobenzene; and aromatic hydrocarbons such as benzene, toluene, and xylene. A single type of organic solvent may be used, or two or more types of organic solvents may be used in an arbitrary combination at arbitrary ratios.

Examples of the alkali compound contained in the aqueous alkali solution include, but are not limited to, alkali metal compounds such as sodium hydroxide, potassium hydroxide, lithium hydroxide, and sodium hydrogen carbonate; and alkaline earth metal compounds. Sodium hydroxide and potassium hydroxide are especially preferred. A single type of alkali compound may be used, or two or more types of alkali compounds may be used in an arbitrary combination at arbitrary ratios.

The concentration of the alkali compound in the aqueous alkali solution is not limited. The alkali compound is usually used in an amount of 5 to 10% by mass for the purpose of controlling the pH of the aqueous alkali solution to 10 to 12 for the reaction. In cases where phosgene is blown, for controlling the pH of the aqueous phase to 10 to 12, preferably 10 to 11, the molar ratio between the material dihydroxy compounds and the alkali compound is preferably adjusted to usually 1:1.9 or more, especially 1:2.0 or more, and usually 1:3.2 or less, especially 1:2.5 or less.

Examples of the polymerization catalyst include, but are not limited to, aliphatic tertiary amines such as trimethylamine, triethylamine, tributylamine, tripropylamine, and trihexylamine; alicyclic tertiary amines such as *N*,*N*'-dimethylcyclohexylamine and *N,N'*-diethylcyclohexylamine; aromatic tertiary amines such as *N*,*N*'-dimethylaniline and *N*,*N*'-diethylaniline; quaternary ammonium salts such as trimethylbenzylammonium chloride, tetramethylammonium chloride, and triethylbenzylammonium chloride; pyridine; guanine; and salts of guanidine. A single type of polymerization catalyst may be used, or two or more types of polymerization catalysts may be used in an arbitrary combination at arbitrary ratios.

Examples of the molecular weight modifier include, but are not limited to, aromatic phenols having a monohydric phenolic hydroxyl group; aliphatic alcohols such as methanol and butanol; mercaptan; and phthalic imide. Aromatic phenols are especially preferred. Specific examples of such aromatic phenols include phenol, *o*-*n*-butylphenol, *m*-*n*-butylphenol, *p*-*n*-butylphenol, *o*-isobutylphenol, *m*-isobutylphenol, *p*-isobutylphenol, *o*-*t*-butylphenol, *m*-*t*-butylphenol, *p*-*t*-butylphenol, *o*-*n*-pentylphenol, *m*-*n*-pentylphenol, *p*-*n*-pentylphenol, *o*-*n*-hexylphenol, *m*-*n*-hexylphenol, *p*-*n*-hexylphenol, *p*-*t*-octylphenol, *o*-cyclohexylphenol, *m*-cyclohexylphenol, *p*-cyclohexylphenol, *o*-phenylphenol, *m*-phenylphenol, *p*-phenylphenol, *o*-*n*-nonylphenol, *m*-nonylphenol, *p*-*n*-nonylphenol, *o*-cumylphenol, *m*-cumylphenol, *p*-cumylphenol, *o*-naphthylphenol, *m*-naphthylphenol, and *p*-naphthylphenol; 2,5-di-*t*-butylphenol; 2,4-di-*t*-butylphenol; 3,5-di-*t*-butylphenol; 2,5-dicumylphenol; 3,5-dicumylphenol; *p*-cresol, bromophenol, tribromophenol, and monoalkylphenols having a linear or branched alkyl group having an average carbon number of 12 to 35 at the ortho position, meta position, or para

position; 9-(4-hydroxyphenyl)-9-(4-methoxyphenyl)fluorene; 9-(4-hydroxy-3-methylphenyl)-9-(4-methoxy-3-methylphenyl)fluorene; and 4-(1-adamantyl)phenol. Among these, *p-t*-butyl phenol, *p*-phenylphenol, and *p*-cumylphenol are preferably used. A single type of molecular weight modifier may be used, or two or more types of molecular weight modifiers may be used in an arbitrary combination at arbitrary ratios.

The amount of the molecular weight modifier used is not limited. For example, the amount is usually not less than 0.5 mole, preferably not less than 1 mole, and usually not more than 50 moles, preferably not more than 30 moles, with respect to 100 moles of the material dihydroxy compounds. In cases where the amount of the molecular weight modifier used is within this range, thermal stability and hydrolysis resistance of the aromatic polycarbonate copolymer can be increased.

In the reaction, a reaction substrate(s) (reaction material(s)), reaction medium/media (organic solvent(s)), catalyst(s), additive(s), and/or the like may be mixed in an arbitrary order as long as a desired aromatic polycarbonate copolymer can be obtained. An appropriate order may be arbitrarily set. For example, in cases where phosgene is used as the carbonate-forming compound, a molecular weight modifier may be mixed at an arbitrary timing between the reaction of the material dihydroxy compounds with phosgene (phosgenation) and the beginning of the polymerization reaction.

The reaction temperature is not limited, and usually 0 to 40°C. The reaction time is not limited, and usually several minutes (for example, 10 minutes) to several hours (for example, 6 hours).

<u>Melt Transesterification</u>

Next, a case where the aromatic polycarbonate copolymer contained in the fluidity modifier for thermoplastic resin of the present invention is produced by melt transesterification is described. In the melt transesterification, transesterification reaction between, for example, a carbonate ester and the material dihydroxy compounds is performed.

The material dihydroxy compounds and the carbonate ester are as described above.

The ratio between the material dihydroxy compounds and the carbonate ester (including the substituted dicarboxylic acid or dicarboxylic acid ester; the same applies hereinafter) is arbitrary as long as a desired aromatic polycarbonate copolymer can be obtained. In the polymerization with the dihydroxy compounds, the carbonate ester is preferably used in an excess amount to the material dihydroxy compounds. That is, the amount of the carbonate ester is preferably 1.01 to 1.30 times the amount (molar ratio), more preferably 1.02 to 1.20 times the amount (molar ratio) of the dihydroxy compounds. In cases where the molar ratio is too low, the amount of terminal OH groups in the resulting aromatic polycarbonate copolymer is large, and the thermal stability of the resin tends to be poor. In cases where the molar ratio is too high, the reaction rate in the transesterification is low, so that production of an aromatic polycarbonate copolymer having a desired molecular weight may be difficult, or a large amount of the carbonate ester remains in the resin, resulting in generation of odor during molding or after production of a molded article in some cases.

Usually, in cases where the aromatic polycarbonate copolymer is produced by melt transesterification, a transesterification catalyst is used. The transesterification catalyst is not limited, and a conventionally known transesterification catalyst may be used. For example, an alkali metal compound(s) and/or an alkaline earth metal compound(s) is/are preferably used. In addition, a basic compound(s) such as a basic boron compound(s), basic phosphorus compound(s), basic ammonium compound(s), and/or amine compound(s) may be supplementarily used in combination. A single type of transesterification catalyst may be used, or two or more types of transesterification catalysts may be used in an arbitrary combination at arbitrary ratios.

In the melt transesterification, the reaction temperature is not limited, and usually 100 to 320°C. The pressure during the reaction is also not limited. The reaction is usually carried out under a reduced pressure of not more than 2 mmHg. More specifically, the operation may be carried out by allowing melt polycondensation reaction to proceed under the above conditions while removing by-products.

In terms of the reaction mode, the reaction may be carried out by either a batch method or a continuous method. In cases where the reaction is carried out by a batch method, a reaction substrate(s), reaction medium/media, catalyst(s), additive(s), and/or the like may be mixed in an arbitrary order as long as a desired aromatic polycarbonate copolymer can be obtained. An appropriate order may be arbitrarily set. In particular, taking into account the stability and the like of the aromatic polycarbonate copolymer, the melt polycondensation reaction is preferably carried out by a continuous method.

In the melt transesterification, a catalyst deactivator may be used, if necessary. As the catalyst deactivator, a compound that neutralizes the transesterification catalyst may be arbitrarily used. Examples of the catalyst deactivator include sulfur-containing acidic compounds and derivatives thereof, and phosphorus-containing compounds and derivatives thereof. A single type of catalyst deactivator may be used, or two or more types of catalyst deactivators may be used in an arbitrary combination at arbitrary ratios.

The amount of the catalyst deactivator used is not limited, and usually not less than 0.5 equivalent, preferably not less than 1 equivalent, and usually not more than 20 equivalents, preferably not more than 10 equivalents, with

respect to the alkali metal or alkaline earth metal contained in the transesterification catalyst. Further, the amount of the catalyst deactivator is usually not less than 1 ppm, and usually not more than 100 ppm, preferably not more than 50 ppm, with respect to the aromatic polycarbonate copolymer.

Thermoplastic Resin Composition

The thermoplastic resin composition of the present invention comprises 100 parts by mass of a thermoplastic resin and 2 to 100 parts by mass of the fluidity modifier for thermoplastic resin described above. By inclusion of the fluidity modifier for thermoplastic resin of the present invention in the thermoplastic resin within the above-described range, fluidity and moldability of the thermoplastic resin can be increased without significantly deteriorating physical properties such as mechanical properties, thermal properties, and optical properties of the resin. In cases where the content of the fluidity modifier for thermoplastic resin of the present invention with respect to the thermoplastic resin is less than the lower limit of this range, the thermoplastic resin composition of the present invention has insufficient fluidity, while in cases where the content exceeds the upper limit of this range, the thermoplastic resin composition of the present invention may have low heat resistance and low mechanical strength, which is not preferred. From such a point of view, the content of the fluidity modifier for thermoplastic resin described above in the thermoplastic resin composition of the present invention is preferably not less than 5 parts by mass, more preferably not less than 7 parts by mass, still more preferably not less than 10 parts by mass, especially preferably not less than 12 parts by mass, with respect to 100 parts by mass of the thermoplastic resin. Further, the content is preferably not more than 90 parts by mass, more preferably not more than 80 parts by mass, still more preferably not more than 70 parts by mass, especially preferably not more than 60 parts by mass. The optimum amount of the fluidity modifier for thermoplastic resin to be included may be appropriately selected and determined in consideration of the type and the content of the carbonate structural unit (A) in the fluidity modifier for thermoplastic resin to be applied, and the type of the thermoplastic resin, as well as the balance between the physical properties and the fluidity required for the thermoplastic resin composition of the present invention.

In cases where the thermoplastic resin composition is a polycarbonate resin composition composed of the later-described polycarbonate resin and the fluidity modifier for thermoplastic resin of the present invention, the ratio of the carbonate structural unit (A) to the total carbonate structural units in the thermoplastic resin composition (the total of the carbonate structural units in the polycarbonate resin and the carbonate structural units in the aromatic polycarbonate copolymer contained in the fluidity modifier for thermoplastic resin of the present invention) is preferably 1 to 20 mol%. Within such a range, a thermoplastic resin composition having not only excellent fluidity and mechanical strength, but also excellent heat resistance, can be obtained.

Flow Value (Q Value) of Thermoplastic Resin Composition

The melt viscosity of the thermoplastic resin composition of the present invention is not limited as long as the effect of the present invention is not deteriorated. The melt viscosity, in terms of the flow value (Q value) as measured using a Koka flow tester according to Appendix C of JIS (1999) K7210 at 240°C at 160 $kgf/cm^2$, is usually not less than 1 (unit: $10^{-2}$ $cm^3/sec.$), preferably not less than 2, more preferably not less than 6, still more preferably not less than 10, especially preferably not less than 20. On the other hand, the upper limit of the Q value is not limited as long as the excellent physical properties of the thermoplastic resin composition of the present invention are not deteriorated. The Q value is usually not more than 100, preferably not more than 90, more preferably not more than 80, still more preferably not more than 70, especially preferably not more than 60.

Glass Transition Temperature (Tg) of Thermoplastic Resin Composition

The heat resistance of the thermoplastic resin composition of the present invention is not limited, and may be appropriately selected depending on the properties of the thermoplastic resin. In cases of an amorphous resin such as a polycarbonate resin, the glass transition temperature (Tg) is preferably from 90°C to 145°C. Since a thermoplastic resin having a glass transition temperature (Tg) within this range has an excellent balance between heat resistance and fluidity (moldability), it can be suitably used for automobile and electric/electronic device members, and optical members such as lenses and light guide plates. From such a point of view, the glass transition temperature (Tg) of the thermoplastic resin composition of the present invention is preferably not less than 95°C, more preferably not less than 100°C, still more preferably not less than 105°C, especially preferably not less than 110°C. On the other hand, the glass transition temperature is preferably not more than 142°C, more preferably not more than 140°C, still more preferably not more than 138°C, especially preferably not more than 135°C.

The measurement method and the definition for the glass transition temperature (Tg) of the thermoplastic resin composition of the present invention are the same as those for the glass transition temperature (Tg) of the aromatic polycarbonate copolymer described above.

Thermoplastic Resin

The thermoplastic resin used for the thermoplastic resin composition of the present invention is not limited, and examples of the thermoplastic resin include polycarbonate resins such as aromatic polycarbonate and aliphatic polycarbonate; polyester carbonate resins such as fatty acid-aromatic polycarbonate copolymers and polyarylate resins; polyarylether resins such as polyphenylene ether resins; polyphenylene sulfide resins; acrylic resins such as polymethyl methacrylate and phenyl methacrylate-methyl methacrylate copolymers; polyester resins such as polyethylene terephthalate resins, polytrimethylene terephthalate, polybutylene terephthalate resins, polycaprolactone resins, and liquid crystal polyester resins; styrene resins such as polystyrene resins, maleic anhydride-modified polystyrene resins, high-impact polystyrene resins (HIPS), acrylonitrile-styrene copolymers (AS resins), methyl methacrylate-styrene copolymers (MS resins), butadiene rubber-acrylonitrile-styrene copolymers (ABS resins), acrylonitrile-styrene-acrylic rubber copolymers (ASA resins), and acrylonitrile-ethylene/propylene rubber-styrene copolymers (AES resins); polyolefin resins such as polyethylene resins, polypropylene resins, cyclic cycloolefin (COP) resins, and cyclic cycloolefin copolymer resins (COC); polyamide resins; polyimide resins; polyetherimide resins; polyurethane resins; polysulfone resins; polyketone resins; and polyoxyalkylene resins such as polyoxymethylene resins. The thermoplastic resin in the present invention also includes, of course, thermoplastic resin alloys containing a combination of two or more of the thermoplastic resins described above. Examples of such alloys include polycarbonate resin/acrylic resin alloys, polycarbonate resin/polyester resin alloys, polycarbonate resin/styrene resin alloys, polycarbonate resin/polyolefin resin alloys, polycarbonate resin/polyphenylene sulfide resin alloys, polyphenylene ether resin/styrene resin alloys (modified polyphenylene ether), and polyphenylene ether resin/polyamide resin alloys.

In particular, the thermoplastic resin used for the thermoplastic resin composition of the present invention is preferably a polycarbonate resin, polyester carbonate resin, or an alloy of a polycarbonate resin and another thermoplastic resin, from the viewpoint of compatibility with the fluidity modifier of the present invention. A polycarbonate resin is more preferred.

The polycarbonate resin as the thermoplastic resin described above is not limited, and examples of the polycarbonate resin include polycarbonate resins obtained by polycondensation of

a dihydroxy compound exemplified as the aromatic dihydroxy compound necessary for forming the carbonate structural unit (B) in the aromatic polycarbonate copolymer contained in the fluidity modifier for thermoplastic resin of the present invention;
a dihydroxy compound exemplified as the other dihydroxy compound different from the aromatic dihydroxy compound necessary for forming the carbonate structural unit (A) and the aromatic dihydroxy compound necessary for forming the carbonate structural unit (B); and
a carbonate-forming compound.

Examples of the method for producing the polycarbonate resin as the thermoplastic resin described above also include the same method as the above-described method for producing the aromatic polycarbonate copolymer contained in the fluidity modifier for thermoplastic resin of the present invention.

The molecular weight of the polycarbonate resin as the thermoplastic resin described above is not limited, and usually 5000 to 100,000, preferably 9000 to 50,000, more preferably 10,000 to 30,000, still more preferably 11,000 to 28,000, in terms of the viscosity average molecular weight (Mv) calculated from the solution viscosity.

When the molecular weight, in terms of the viscosity average molecular weight, of the polycarbonate resin as the thermoplastic resin described above is controlled to within the range described above, two or more kinds of polycarbonate resins having different viscosity average molecular weights may be mixed. In such a case, the viscosity average molecular weight (Mv) of the polycarbonate resin of the present invention may be controlled by mixing a polycarbonate resin having a viscosity average molecular weight outside the above-described preferred range.

The measurement method and the definition for the molecular weight, in terms of the viscosity average molecular weight (Mv), of the polycarbonate resin as the thermoplastic resin described above are the same as those for the viscosity average molecular weight (Mv) of the aromatic polycarbonate copolymer described above.

The thermoplastic resin composition of the present invention may contain another component (resin additive) in addition to the components described above as long as the effect of the present invention and the desired physical properties are not remarkably inhibited. Examples of the resin additive include heat stabilizers, antioxidants, ultraviolet absorbers, brightness improvers, dyes, pigments, mold release agents, flame retardants, reinforcing materials, antistatic agents, anti-clouding agents, lubricants, anti-blocking agents, dispersants, and antimicrobial agents. For use as a common injection molding material, the thermoplastic resin composition preferably further contains at least one selected from the group consisting of heat stabilizers, antioxidants, ultraviolet absorbers, brightness improvers, dyes, pigments, and mold release agents.

A single type of resin additive may be included, or two or more types of resin additives may be included in an

arbitrary combination at arbitrary ratios.

Heat Stabilizer

The heat stabilizer used in the thermoplastic resin composition of the present invention is not limited as long as it is a known heat stabilizer that has conventionally been added to thermoplastic resins, and examples of the heat stabilizer include phosphorus-based heat stabilizers and sulfur-based heat stabilizers. In particular, phosphorus-based stabilizers are preferred since they tend to allow production of a thermoplastic resin of the present invention having a better initial hue and a better residence heat stability.

Specific examples of the phosphorus-based heat stabilizers include oxoacids of phosphorus such as phosphoric acid, phosphonic acid, phosphorous acid, phosphinic acid, and polyphosphoric acid; metal salts of acid pyrophosphoric acid such as sodium acid pyrophosphate, potassium acid pyrophosphate, and calcium acid pyrophosphate; phosphoric acid salts of Group 1 or Group 2B metals such as potassium phosphate, sodium phosphate, cesium phosphate, and zinc phosphate; organic phosphate compounds; organic phosphite compounds; and organic phosphonite compounds. From the viewpoint of thermal stability and moist heat stability, organic phosphite compounds and organic phosphonite are especially preferred, and organic phosphite compounds are most preferred.

Examples of the organic phosphite compounds include triphenylphosphite, tris(4-methylphenyl)phosphite, tris(4-t-butylphenyl)phosphite, tris(monononylphenyl)phosphite, tris(2-methyl-4-ethylphenyl)phosphite, tris(2-methyl-4-t-butylphenyl)phosphite, tris(2,4-di-t-butylphenyl)phosphite, tris(2,6-di-t-butylphenyl)phosphite, tris(2,4-di-t-butyl-5-methylphenyl)phosphite, tris(mono,dinonylphenyl)phosphite, bis(monononylphenyl)pentaerythritol-di-phosphite, bis(2,4-di-t-butylphenyl)pentaerythritol-di-phosphite, bis(2,6-di-t-butyl-4-methylphenyl)pentaerythritol-diphosphite, bis(2,4,6-tri-t-butylphenyl)pentaerythritol-di-phosphite, bis(2,4-di-t-butyl-5-methylphenyl)pentaerythritol-di-phosphite, (2,6-di-t-butyl-4methylphenyl)pentaerythritoldiphosphite, 2,2-methylenebis(4,6-dimethylphenyl)octylphosphite, 2,2-methylenebis(4-t-butyl-6-methylphenyl)octylphosphite, 2,2-methylenebis(4,6-di-t-butylphenyl)octylphosphite, 2,2-methylenebis(4,6-dimethylphenyl)hexylphosphite, 2,2-methylenebis(4,6-di-t-butylphenyl)hexylphosphite, and 2,2-methylenebis(4,6-di-t-butylphenyl)stearyl phosphite. Examples of the organic phosphonite compounds include tetrakis(2,4-di-t-butylphenyl) 4,4'-biphenylenediphosphonite and tetrakis(2,4-di-t-butyl-5-methylphenyl) 4,4'-biphenylene diphosphonite.

Specific examples of such organic phosphite compounds include "Adekastab 1178", "Adekastab (registered trademark) 2112", "Adekastab PEP-8", "Adekastab PEP-36", and "Adekastab HP-10", manufactured by ADEKA Corporation; "JP-351", "JP-360", and "JP-3CP", manufactured by Johoku Chemical Co., Ltd.; and "Irgafos (registered trademark) 168", manufactured by BASF. Examples of the organic phosphonite compounds include "Irgafos P-EPQ", manufactured by BASF.

A single type of phosphorus-based stabilizer may be included, or two or more types of phosphorus-based stabilizers may be included in an arbitrary combination at arbitrary ratios.

The content of the phosphorus-based stabilizer is not limited, and usually not less than 0.001 part by mass, preferably not less than 0.01 part by mass, more preferably not less than 0.03 part by mass, and usually not more than 1 part by mass, preferably not more than 0.7 mass, more preferably not more than 0.5 part by mass, with respect to a total of 100 parts by mass of the thermoplastic resin and the fluidity modifier for thermoplastic resin. In cases where the content of the phosphorus-based stabilizer is less than the lower limit of this range, the thermal stability effect may be insufficient, while in cases where the content of the phosphorus-based stabilizer exceeds the upper limit of this range, the moist heat stability may be low, and generation of gas tends to occur during injection molding.

Antioxidant

The thermoplastic resin composition of the present invention also preferably contains an antioxidant. The antioxidant used in the thermoplastic resin composition of the present invention is not limited as long as it is a known antioxidant that has conventionally been added to thermoplastic resins, and examples of the antioxidant include hindered phenol antioxidants. Specific examples of the hindered phenol antioxidants include pentaerythritol tetrakis[3-(3,5-di-tert-butyl-4-hydroxyphenyl)propionate], octadecyl-3-(3,5-di-*tert*-butyl-4-hydroxyphenyl)propionate, thiodiethylene bis[3-(3,5-di-tert-butyl-4-hydroxyphenyl)propionate], *N,N'*-hexane-1,6-diylbis[3-(3,5-di-tert-butyl-4-hydroxyphenylpropionamide), 2,4-dimethyl-6-(1-methylpentadecyl)phenol, diethyl[[3,5-bis(1,1-dimethylethyl)-4-hydroxyphenyl]methyl]phosphonate, 3,3',3",5,5',5"-hexa-*tert*-butyl-a,a',a"-(mesitylene-2,4,6-triyl)tri-p-cresol, 4,6-bis(octylthiomethyl)-o-cresol, ethylenebis(oxyethylene)bis[3-(5-tert-butyl-4-hydroxy-m-tolyl)propionate], hexamethylene bis[3-(3,5-di-*tert*-butyl-4-hydroxyphenyl)propionate], 1,3,5-tris(3,5-di-tert-butyl-4-hydroxybenzyl)-1,3,5-triazine-2,4,6(1*H*,3*H*,5*H*)-trione, 2,6-di-*tert*-butyl-4-(4,6-bis(octylthio)-1,3,5-triazin-2-ylamino)phenol, and 2-[1-(2-hydroxy-3,5-di-tert-pentylphenyl)ethyl]-4,6-di-tert-pentylphenyl acrylate.

Among these, pentaerythritol tetrakis[3-(3,5-di-tert-butyl-4-hydroxyphenyl)propionate] and octadecyl-3-(3,5-di-

*tert*-butyl-4-hydroxyphenyl)propionate are preferred. Specific examples of such phenolic antioxidants include "Irganox 1010" and "Irganox 1076", manufactured by Ciba Specialty Chemicals; and "Adekastab AO-50" and "Adekastab AO-60", manufactured by ADEKA Corporation.

A single type of antioxidant may be included, or two or more types of antioxidants may be included in an arbitrary combination at arbitrary ratios.

The content of the antioxidant is not limited, and usually not less than 0.001 part by mass, preferably not less than 0.01 part by mass, more preferably not less than 0.1% part by mass, and usually not more than 1 part by mass, preferably not more than 0.5 part by mass, with respect to a total of 100 parts by mass of the thermoplastic resin and the fluidity modifier for thermoplastic resin. In cases where the content of the antioxidant is less than the lower limit of this range, its effect as an antioxidant may be insufficient, while in cases where the content of the phenolic stabilizer exceeds the upper limit of this range, generation of gas may tend to occur during injection molding.

<u>Ultraviolet Absorber</u>

Examples of the ultraviolet absorbers include inorganic ultraviolet absorbers such as cerium oxide and zinc oxide; and organic ultraviolet absorbers such as benzotriazole compounds, benzophenone compounds, salicylate compounds, cyanoacrylate compounds, triazine compounds, oxanilide compounds, malonate compounds, and hindered amine compounds. Among these, organic ultraviolet absorbers are preferred. Benzotriazole compounds are more preferred. By selection of an organic ultraviolet absorber, the thermoplastic resin composition of the present invention can have favorable transparency and mechanical properties.

Specific examples of the benzotriazole compounds include 2-(2'-hydroxy-5'-methylphenyl)benzotriazole, 2-[2'-hydroxy-3',5'-bis($\alpha$,$\alpha$-dimethylbenzyl)phenyl]-benzotriazole, 2-(2'-hydroxy-3',5'-di-tert-butyl-phenyl)-benzotriazole, 2-(2'-hydroxy-3'-tert-butyl-5'-methylphenyl)-5-chlorobenzotriazole, 2-(2'-hydroxy-3',5'-di-tert-butylphenyl)-5-chlorobenzotriazole), 2-(2'-hydroxy-3',5'-di-tert-amyl)-benzotriazole, 2-(2'-hydroxy-5'-tert-octylphenyl)benzotriazole, and 2,2'-methylenebis[4-(1,1,3,3-tetramethylbutyl)-6-(2N-benzotriazol-2-yl)phenol]. Among these, 2-(2'-hydroxy-5'-tert-octylphenyl)benzotriazole and 2,2'-methylenebis[4-(1,1,3,3-tetramethylbutyl)-6-(2N-benzotriazol-2-yl)phenol are preferred. 2-(2'-Hydroxy-5'-*tert*-octylphenyl)benzotriazole is especially preferred.

Examples of commercially available products of such benzotriazole compounds include "Seesorb 701", "Seesorb 705", "Seesorb 703", "Seesorb 702", "Seesorb 704", and "Seesorb 709", manufactured by Shipro Kasei Kaisha, Ltd.; "Biosorb 520", "Biosorb 582", "Biosorb 580", and "Biosorb 583", manufactured by Kyodo Chemical Co., Ltd.; "Kemisorb 71" and "Kemisorb 72", manufactured by Chemipro Kasei Kaisha, Ltd.; "Cyasorb UV5411", manufactured by Cytec Industries Inc.; "LA-32", "LA-38", "LA-36", "LA-34", and "LA-31", manufactured by ADEKA Corporation; and "Tinuvin P", "Tinuvin 234", "Tinuvin 326", "Tinuvin 327", and "Tinuvin 328", manufactured by Ciba Specialty Chemicals.

Specific examples of the benzophenone compounds include 2,4-dihydroxybenzophenone, 2-hydroxy-4-methoxybenzophenone, 2-hydroxy-4-methoxybenzophenone-5-sulfonic acid, 2-hydroxy-4-n-octoxybenzophenone, 2-hydroxy-n-dodecyloxybenzophenone, bis(5-benzoyl-4-hydroxy-2-methoxyphenyl)methane, 2,2'-dihydroxy-4-methoxybenzophenone, and 2,2'-dihydroxy-4,4'-dimethoxybenzophenone.

Examples of commercially available products of such benzophenone compounds include "Seesorb 100", "Seesorb 101", "Seesorb 101S", "Seesorb 102", and "Seesorb 103", manufactured by Shipro Kasei Kaisha, Ltd.; "Biosorb 100", "Biosorb 110", and "Biosorb 130", manufactured by Kyodo Chemical Co., Ltd.; "Kemisorb 10", "Kemisorb 11", "Kemisorb 11S", "Kemisorb 12", "Kemisorb 13", and "Kemisorb 111", manufactured by Chemipro Kasei Kaisha, Ltd.; "Uvinul 400", manufactured by BASF; "Uvinul M-40", manufactured by BASF; "Uvinul MS-40", manufactured by BASF; "Cyasorb UV9", "Cyasorb UV284", "Cyasorb UV531", and "Cyasorb UV24", manufactured by Cytec Industries Inc.; and "Adekastab 1413" and "Adekastab LA-51", manufactured by ADEKA Corporation.

Specific examples of the salicylate compounds include phenyl salicylate and 4-tert-butylphenyl salicylate. Examples of commercially available products of such salicylate compounds include "Seesorb 201" and "Seesorb 202", manufactured by Shipro Kasei Kaisha, Ltd.; and "Kemisorb 21" and "Kemisorb 22", manufactured by Chemipro Kasei Kaisha, Ltd.

Specific examples of the cyanoacrylate compounds include ethyl-2-cyano-3,3-diphenylacrylate and 2-ethylhexyl-2-cyano-3,3-diphenylacrylate. Examples of commercially available products of such cyanoacrylate compounds include "Seesorb 501", manufactured by Shipro Kasei Kaisha, Ltd.; "Biosorb 910", manufactured by Kyodo Chemical Co., Ltd.; "Uvisolator 300", manufactured by Daiichi Kasei Co., Ltd.; and "Uvinul N-35" and "Uvinul N-539", manufactured by BASF.

Examples of the triazine compounds include compounds having a 1,3,5-triazine skeleton. Specific examples of such triazine compounds include "LA-46", manufactured by ADEKA Corporation; and "Tinuvin 1577ED", "Tinuvin 400", "Tinuvin 405", "Tinuvin 460", "Tinuvin 477-DW", and "Tinuvin 479", manufactured by Ciba Specialty Chemicals.

Specific examples of the oxanilide compounds include 2-ethoxy-2'-ethyloxalinic acid bisanilide. Examples of commercially available products of such oxanilide compounds include "Sanduvor VSU", manufactured by Clariant.

As the malonate compounds, 2-(alkylidene) malonates are preferred. 2-(1-Arylalkylidene) malonates are more preferred. Examples of commercially available products of such malonate compounds include "PR-25", manufactured by Clariant Japan K.K.; and "B-CAP", manufactured by Ciba Specialty Chemicals.

The content of the ultraviolet absorber is usually not less than 0.01 part by mass, preferably not less than 0.1 part by mass, and usually not more than 3 parts by mass, preferably not more than 1 part by mass, with respect to a total of 100 parts by mass of the thermoplastic resin and the fluidity modifier for thermoplastic resin. In cases where the content of the ultraviolet absorber is less than the lower limit of this range, the weatherability-improving effect may be insufficient, while in cases where the content of the ultraviolet absorber exceeds the upper limit of this range, mold deposits and the like may be produced to cause mold contamination. A single type of ultraviolet absorber may be included, or two or more types of ultraviolet absorbers may be included in an arbitrary combination at arbitrary ratios.

Brightness Improver

The thermoplastic resin composition of the present invention also preferably contains a brightness improver. The brightness improver used in the thermoplastic resin composition of the present invention is not limited as long as it is a known brightness improver that has conventionally been added to thermoplastic resins, especially polycarbonate resins, and preferred examples of the brightness improver include polyalkylene glycol and fatty acid esters thereof, alicyclic epoxy compounds, low molecular weight acrylic resins, and low molecular weight styrene-based resins.

Examples of the polyalkylene glycol include homopolymers and copolymers of alkylene glycols, and derivatives thereof. Specific examples of the polyalkylene glycol include $C_2$-$C_6$ polyalkylene glycols such as polyethylene glycol, polypropylene glycol, and polytetramethylene glycol; random or block copolymers of polyoxyethylene-polyoxypropylene; and copolymers such as glyceryl ethers of polyoxyethylene-polyoxypropylene, and monobutyl ethers of polyoxyethylene-polyoxypropylene.

Among these, polymers containing an oxyethylene unit, for example, polyethylene glycol, polypropylene glycol, polyoxyethylene-polyoxypropylene copolymers, and derivatives thereof are preferred.

The number average molecular weight of the polyalkylene glycol is usually 500 to 500,000, preferably 1000 to 100,000, more preferably 1000 to 50,000.

As the fatty acid ester of the polyalkylene glycol fatty acid ester, either a linear or branched fatty acid ester may be used. The fatty acid constituting the fatty acid ester may be either a saturated fatty acid or an unsaturated fatty acid. Fatty acid esters in which a part of the hydrogen atoms are substituted with a substituent(s) such as hydroxyl may also be used.

Examples of the fatty acid constituting the fatty acid ester include monovalent or divalent fatty acids having a carbon number of not less than 10, for example, monovalent saturated fatty acids such as capric acid, lauric acid, tridecylic acid, myristic acid, pentadecylic acid, palmitic acid, heptadecylic acid, stearic acid, nonadecanoic acid, arachic acid, behenic acid, lignoceric acid, cerotic acid, heptacosanoic acid, montanic acid, melissic acid, and lacceric acid; monovalent unsaturated fatty acids having a carbon number of not less than 10 such as unsaturated fatty acids including oleic acid, elaidic acid, linoleic acid, linolenic acid, arachidonic acid, cetoleic acid, and erucic acid; and divalent fatty acids having a carbon number of not less than 10 such as sebacic acid, undecanedioic acid, dodecanedioic acid, tetradecanedioic acid, thapsic acid and decenedioic acid, undecenedioic acid, and dodecenedioic acid. These fatty acids may be used individually, or as a combination of two or more thereof. Examples of the fatty acid also include fatty acids having one or more hydroxyl groups in the molecule.

Preferred specific examples of the polyalkylene glycol fatty acid ester include polyethylene glycol monopalmitate, polyethylene glycol dipalmitate, polyethylene glycol monostearate, polyethylene glycol distearate, polyethylene glycol (monopalmitate-monostearate), polypropylene glycol monopalmitate, polypropylene glycol dipalmitate, polypropylene glycol monostearate, polypropylene glycol distearate, and polypropylene glycol (monopalmitate-monostearate).

The content of the brightness improver is not limited, and preferably 0.01 to 1 part by mass with respect to a total of 100 parts by mass of the thermoplastic resin and the fluidity modifier for thermoplastic resin of the present invention. The content is more preferably not less than 0.02 part by mass, still more preferably not less than 0.03 part by mass, and especially not more than 0.9 part by mass, more preferably not more than 0.8 part by mass, still more preferably not more than 0.7 part by mass, especially not more than 0.6 part by mass. In cases where the content of the brightness improver is less than the lower limit of this range, improvement of the hue and suppression of yellowing may be insufficient, while in cases where the content of the brightness improver exceeds the upper limit of this range, the color tone may be poor, and the light transmittance may be low.

Dye/Pigment

Examples of the dyes and pigments include inorganic pigments, organic pigments, and organic dyes. Among these, organic pigments and organic dyes are preferred for maintenance of high transparency of transparent resins such

as polycarbonate resins.

Examples of the inorganic pigments include carbon black; sulfide-based pigments such as cadmium red and cadmium yellow; silicate-based pigments such as ultramarine blue; oxide-based pigments such as titanium oxide, zinc white, red iron oxide, chromium oxide, iron black, titan yellow, zinc-iron-based brown, titanium-cobalt-based green, cobalt green, cobalt blue, copper-chromium-based black, and copper-iron-based black; chromic acid-based pigments such as chrome yellow and molybdate orange; and ferrocyanide-based pigments such as Prussian blue.

Examples of the organic pigments and the organic dyes include phthalocyanine-based dyes and pigments such as copper phthalocyanine blue and copper phthalocyanine green; azo-based dyes and pigments such as nickel azo yellow; condensed polycyclic dyes and pigments such as thioindigo-based, perinone-based, perylene-based, quinacridone-based, dioxazine-based, isoindolinone-based, and quinophthalone-based dyes and pigments; and anthraquinone-based, heterocycle-based, and methyl-based dyes and pigments.

Among these, from the viewpoint of thermal stability, titanium oxide; carbon black; cyanine-based, quinoline-based, anthraquinone-based, and phthalocyanine-based compounds; and the like are preferred.

A single type of dye/pigment may be included, or two or more types of dye(s)/pigment(s) may be included in an arbitrary combination at arbitrary ratios. For the purposes of ease of handling during the extrusion, and improvement of dispersibility in the resin composition, the dye/pigment may be prepared as a masterbatch with a thermoplastic resin such as a polystyrene-based resin, polycarbonate-based resin, or acrylic-based resin.

The content of the dye/pigment in the thermoplastic resin composition of the present invention is usually not more than 5 parts by mass, preferably not more than 3 parts by mass, more preferably not more than 2 parts by mass, with respect to a total of 100 parts by mass of the thermoplastic resin and the fluidity modifier for thermoplastic resin. In cases where the content of the dye/pigment is too large, the impact resistance may be insufficient.

Mold Release Agent

The thermoplastic resin composition of the present invention also preferably contains a mold release agent. The mold release agent used in the thermoplastic resin composition of the present invention is not limited as long as it is a known mold release agent that has conventionally been added to thermoplastic resins, and examples of the mold release agent include aliphatic carboxylic acids; esters of an aliphatic carboxylic acid and an alcohol; aliphatic hydrocarbon compounds having a number average molecular weight of 200 to 15,000; and polysiloxane-based silicone oils.

Examples of the aliphatic carboxylic acids include saturated or unsaturated, aliphatic monovalent, divalent, or trivalent carboxylic acids. The aliphatic carboxylic acids include alicyclic carboxylic acids. Among these aliphatic carboxylic acids, $C_6$-$C_{36}$ monovalent or divalent carboxylic acids are preferred. $C_6$-$C_{36}$ aliphatic saturated monovalent carboxylic acids are more preferred. Specific examples of such aliphatic carboxylic acids include palmitic acid, stearic acid, caproic acid, capric acid, lauric acid, arachic acid, behenic acid, lignoceric acid, cerotic acid, melissic acid, tetratriacontanoic acid, montanic acid, adipic acid, and azelaic acid.

Examples of the aliphatic carboxylic acid in the esters of an aliphatic carboxylic acid and an alcohol include the same aliphatic carboxylic acids as described above. On the other hand, examples of the alcohol include saturated or unsaturated, monohydric or polyhydric alcohols. Each of these alcohols may have a substituent such as a fluorine atom or an aryl group. Among these, monohydric or polyhydric, saturated alcohols having a carbon number of not more than 30 are preferred. Aliphatic saturated monohydric alcohols and aliphatic saturated polyhydric alcohols having a carbon number of not more than 30 are more preferred. The term "aliphatic" herein is used as a term also including alicyclic compounds.

Specific examples of such alcohols include octanol, decanol, dodecanol, stearyl alcohol, behenyl alcohol, ethylene glycol, diethylene glycol, glycerin, pentaerythritol, 2,2-dihydroxyperfluoropropanol, neopentylene glycol, ditrimethylolpropane, and dipentaerythritol.

Each of the above esters may contain an aliphatic carboxylic acid and/or alcohol as an impurity/impurities. Each of the above esters may be either a pure substance or a mixture of a plurality of compounds. Each of the aliphatic carboxylic acid and the alcohol bound to each other to constitute one ester may be of a single type, or two or more types thereof may be used in an arbitrary combination at arbitrary ratios.

Specific examples of the ester of the aliphatic carboxylic acid and the alcohol include bees waxes (mixtures containing myricyl palmitate as a major component), stearyl stearate, behenyl behenate, stearyl behenate, glycerin monopalmitate, glycerin monostearate, glycerin distearate, glycerin tristearate, pentaerythritol monopalmitate, pentaerythritol monostearate, pentaerythritol distearate, pentaerythritol tristearate, and pentaerythritol tetrastearate.

Examples of the aliphatic hydrocarbons having a number average molecular weight of 200 to 15,000 include liquid paraffins, paraffin waxes, microwaxes, polyethylene waxes, Fischer-Tropsch waxes, and $\alpha$-olefin oligomers having a carbon number of 3 to 12. The aliphatic hydrocarbons also include alicyclic hydrocarbons. Each of these hydrocarbons may be partially oxidized.

Among these, paraffin waxes, polyethylene waxes, and partially oxidized polyethylene waxes are preferred.

Paraffin waxes and polyethylene waxes are more preferred.

The number average molecular weight of the aliphatic hydrocarbon is preferably not more than 5000.

The aliphatic hydrocarbon may be a single substance, or may be a mixture of various constituents having different molecular weights as long as the major component is contained within the above-described range.

Examples of the polysiloxane-based silicone oils include dimethyl silicone oils, methylphenyl silicone oils, diphenyl silicone oils, and fluorinated alkyl silicone oils.

A single type of mold release agent described above may be included, or two or more types of the mold release agents may be included in an arbitrary combination at arbitrary ratios.

The content of the mold release agent is not limited, and usually not less than 0.001 part by mass, preferably not less than 0.01 part by mass, and usually not more than 2 parts by mass, preferably not more than 1 part by mass, with respect to a total of 100 parts by mass of the thermoplastic resin and the fluidity modifier for thermoplastic resin. In cases where the content of the mold release agent is less than the lower limit of this range, the mold-releasing effect may be insufficient, while in cases where the content of the mold release agent exceeds the upper limit of this range, a decrease in the hydrolysis resistance, mold contamination during injection molding, and the like may occur.

## Method for Producing Thermoplastic Resin Composition

The method for producing the thermoplastic resin composition of the present invention is not limited, and known methods for production of thermoplastic resin compositions may be widely employed.

Specific examples of the method include methods in which the thermoplastic resin, the fluidity modifier for thermoplastic resin of the present invention, and another/other component(s) blended as required are preliminarily mixed using a mixer such as a tumbler or Henschel mixer, and then the resulting mixture is melt-kneaded in a mixer such as a Banbury mixer, roll, Brabender, single-screw kneading extruder, twin-screw kneading extruder, kneader, or the like.

The thermoplastic resin composition of the present invention may also be produced by, for example, a method in which the components are not mixed, or only a part of the components are mixed, before the components are fed to an extruder using a feeder to perform melt kneading.

During the production of the thermoplastic resin of the present invention, an additive(s) may be directly added to the molten resin after the polymerization, and the resulting mixture may be kneaded. In cases where an additive(s) is/are added in this manner, a method in which the molten resin is directly introduced into an extruder after the polymerization, and then the additive(s) is/are added thereto, followed by performing melt kneading and pelletization is preferred.

The thermoplastic resin composition of the present invention may also be produced by, for example, a method in which a part of the components are preliminarily mixed and fed into an extruder, and melt kneading is performed to obtain a resin composition as a masterbatch, followed by mixing the masterbatch with the other component(s) and performing melt kneading of the resulting mixture.

In cases where a hardly dispersible component is to be mixed, the hardly dispersible component may be preliminarily dissolved or dispersed in a solvent such as water or an organic solvent, and kneading may be performed with the resulting solution or dispersion to increase the dispersibility.

## Method for Producing Thermoplastic Resin Molded Article

The method for producing a thermoplastic resin molded article of the present invention is a method for obtaining a thermoplastic resin molded article by injection molding of the thermoplastic resin composition of the present invention.

The shape, pattern, color, size, and the like of the thermoplastic resin molded article of the present invention are not limited, and may be appropriately selected depending of the intended use of the molded article. Examples of the thermoplastic resin molded article include those having various shapes such as board-like shapes, plate-like shapes, rod-like shapes, sheet-like shapes, film-like shapes, cylindrical shapes, ring-like shapes, circular shapes, elliptical shapes, polygonal shapes, irregular shapes, hollow shapes, frame-like shapes, box-like shapes, and panel-like shapes, as well as special shapes. Further, for example, the thermoplastic resin molded article may have an irregular surface, or may have a three-dimensional shape with a three-dimensional curved surface.

The method of the injection molding is not limited, and an arbitrary molding method commonly employed for thermoplastic resins may be employed. Examples of the method include ultra-high-speed injection molding; injection compression molding; two-color molding; hollow molding such as gas assist molding; molding methods using an insulated mold; molding methods using a rapid heating mold; foam molding (including supercritical fluid); insert molding; and IMC (in-mold coating) molding. A molding method using a hot runner method may also be used.

Examples of the molded article include electric and electronic devices, office automation devices, information terminal devices, mechanical components, household electrical appliances, car parts, building components, containers, leisure goods/miscellaneous goods, and components of illuminating devices and the like. Among these, the production method can be especially suitably used for transparent optical members of electric and electronic devices, office automation devices, information terminal devices, household electrical appliances, illuminating devices, and the like.

EXAMPLES

The present invention is described below more concretely by way of Examples. However, the present invention is not limited to the following Examples. Each value in the production conditions and the evaluation results in the following Examples has a meaning as a preferred upper limit or lower limit value in an embodiment of the present invention, and a preferred range may be defined by combination of an upper limit or lower limit value described above and a value in the following Examples, or by combination of values in the Examples. Unless otherwise specified, the term "part" in the following description means "part by mass", which is expressed on a mass basis.

(Synthesis Example 1)

<Synthesis of 1,1-Bis(4-hydroxyphenyl)decane (BP-C10)>

A synthesis example of 1,1-bis(4-hydroxyphenyl)decane, which is listed in the later-mentioned Table-1, is described below.

Phenol (100 parts by weight) was melted by warming at 40°C, and concentrated hydrochloric acid (1.33 parts by weight) was added thereto. To the resulting mixture, a mixture of decanal (33.1 parts by weight) and toluene (21.2 parts by weight) was added dropwise for four hours. Thereafter, the mixture was aged at 40°C for 1 hour, and the reaction was stopped with an aqueous sodium hydrogen carbonate solution. After evaporating phenol from the reaction mixture under reduced pressure, extraction was performed with toluene, and the mixture was washed with water three times. After removing the solvent by distillation, crystallization from toluene and heptane was performed to obtain 23.3 parts by weight of the compound of interest as a white powder. The purity was 99.4%, and the melting point was 93°C.

(Synthesis Example 2)

<Synthesis of 1,1-Bis(4-hydroxyphenyl)dodecane (BP-C12)>

A synthesis example of 1,1-bis(4-hydroxyphenyl)dodecane, which is listed in the later-mentioned Table-1, is described below.

The same synthesis as in Synthesis Example 1 was carried out except that dodecanal (39.0 parts by weight) was used instead of decanal. As a result, 27.8 parts by weight of the compound of interest was obtained as a white powder. The purity was 99.0%, and the melting point was 86°C.

The compounds of interest in Synthesis Examples 1 and 2 were analyzed under the following analysis conditions.

[Purity]

In 1 part by mass of acetonitrile, 0.01 part by mass of a sample was dissolved. The obtained solution was analyzed using an HPLC analyzer (LC-2010, manufactured by Shimadzu Corporation). The conditions were as follows.

Column: Inertsil ODS3V (manufactured by GL Sciences Inc.)
Eluting solvent: acetonitrile / 0.1% by mass ammonium acetate solution
Detector: UV (254 nm)

The purity was determined from the area% at 254 nm.

[Melting Point]

An SMP3 melting point apparatus manufactured by Stuart Scientific was used. The temperature was increased at 2°C/min., and the temperature at the time point when the solid was totally melted was regarded as the melting point.

Table-1 shows the names (abbreviations) of the dihydroxy compounds used as materials of the aromatic polycarbonate resins, and the carbonate-forming compound, used in the following Examples and Comparative Examples.

[Table 1]

Table-1

| Abbreviation | |
|---|---|
| BPA | 2,2-Bis(4-hydroxyphenyl)propane manufactured by Mitsubishi Chemical Corporation |
| DPC | Carbonate-forming compound Diphenyl carbonate, manufactured by Mitsubishi Chemical Corporation |
| BP-C10 | 1,1-Bis(4-hydroxyphenyl)decane |
| BP-C12 | 1,1-Bis(4-hydroxyphenyl)dodecane |
| BP-C8 | 1,1-Bis(4-hydroxyphenyl)-2-ethylhexane manufactured by Tokyo Chemical Industry Co., Ltd. |

Production Example 1 of Aromatic Polycarbonate Copolymer

The material dihydroxy compounds and the carbonate-forming compound described in Table-1 were fed to a glass reactor having a capacity of 150 mL equipped with a reactor heater and a reactor pressure regulator, at the material feed ratios described in Table-2, such that the total amount of dihydroxy compounds was 117 g. Further, as a catalyst, 2 wt% aqueous cesium carbonate solution was added thereto such that cesium carbonate was contained at 1 pmol per 1 mol of the total dihydroxy compounds, to prepare a material mixture.

Subsequently, an operation of reducing the pressure in the glass reactor to about 100 Pa (0.75 Torr) and then restoring the pressure with nitrogen to atmospheric pressure was repeated three times, thereby replacing the inside of the reactor with nitrogen. Thereafter, the external temperature of the reactor was adjusted to 220°C to allow a slow increase in the internal temperature of the reactor, thereby dissolving the mixture. Subsequently, a stirrer was rotated at 100 rpm. Thereafter, the pressure in the reactor, in terms of the absolute pressure, was reduced from 101.3 kPa (760 Torr) to 13.3 kPa (100 Torr) for 40 minutes, during which phenol produced as a by-product of oligomerization reaction of the dihydroxy compounds and DPC in the reactor was removed by distillation.

Subsequently, while the pressure in the reactor was kept at 13.3 kPa, and while phenol was further removed by distillation, transesterification reaction was carried out for 80 minutes. Thereafter, the external temperature of the reactor was increased to 250°C, and the internal pressure, in terms of the absolute pressure, of the reactor was reduced from 13.3 kPa (100 Torr) to 399 Pa (3 Torr) for 40 minutes while removing distilled phenol to the outside of the system. Thereafter, the external temperature of the reactor was increased to 260°C, and the absolute pressure in the reactor was reduced to 30 Pa (about 0.2 Torr). The rotation speed of the stirrer was reduced to 30 rpm. Polycondensation reaction was thus allowed to proceed. When the stirring power of the stirrer in the reactor reached a predetermined value, the polycondensation reaction was stopped. After restoring the absolute pressure in the rector with nitrogen to 101.3 kPa, the polycarbonate resin copolymer was extracted from the reactor. This operation was repeated a plurality of times, and the whole amount of the polycarbonate resin copolymer obtained was combined. The copolymer was then remelted at 250°C under nitrogen atmosphere, and butyl paratoluenesulfonate was mixed therewith at 5 ppm. After melt-kneading the resulting mixture, the polycarbonate resin copolymer was extracted again.

Production Example 2 of Aromatic Polycarbonate Copolymer

The material dihydroxy compounds and the carbonate-forming compound described in Table-1 were weighed at the material feed ratios described in Table-2 such that the total amount of the dihydroxy compounds was 6700 g. Further, as a catalyst, 2 wt% aqueous cesium carbonate solution was added thereto such that cesium carbonate was contained at 0.5 $\mu$mol per 1 mol of the total dihydroxy compounds, to prepare a material mixture. The mixture was fed to a first reactor having a capacity of 200 L equipped with a stirrer, heating medium jacket, vacuum pump, and reflux condenser.

Subsequently, an operation of reducing the pressure in the first reactor to 1.33 kPa (10 Torr) and then restoring the pressure with nitrogen to atmospheric pressure was repeated five times, thereby replacing the inside of the first reactor with nitrogen. Thereafter, a heating medium at a temperature of 230°C was passed through the heating medium jacket to allow a slow increase in the internal temperature of the first reactor, thereby dissolving the mixture. Thereafter, the stirrer was rotated at 300 rpm, and the temperature in the heating medium jacket was controlled to keep the internal temperature of the first reactor at 220°C. Thereafter, the pressure in the first reactor, in terms of the absolute pressure, was reduced from 101.3 kPa (760 Torr) to 13.3 kPa (100 Torr) for 40 minutes, during which phenol produced as a by-product of oligomerization reaction of the dihydroxy compounds and DPC in the first reactor was removed by distillation.

Subsequently, while the pressure in the first reactor was kept at 13.3 kPa, and while phenol was further removed

by distillation, transesterification reaction was carried out for 80 minutes. The absolute pressure in the system was restored with nitrogen to 101.3 kPa, and then increased to 0.2 MPa in terms of the gauge pressure. The oligomer in the first reactor was transferred under the pressure to a second reactor through a transfer pipe preliminarily heated to not less than 200°C. The capacity of the second reactor was 200 L, and the reactor was equipped with a stirrer, heating medium jacket, vacuum pump, and reflux condenser. Its internal pressure had been adjusted to atmospheric pressure, and its internal temperature had been adjusted to 240°C.

The oligomer transferred under the pressure into the second reactor was stirred at 38 rpm, and the internal temperature was increased by the heating medium jacket. The absolute pressure in the second reactor was reduced from 101.3 kPa to 13.3 kPa for 40 minutes. Thereafter, the temperature was kept increased, and the internal pressure, in terms of the absolute pressure, was reduced from 13.3 kPa to 399 Pa (3 Torr) for 40 minutes while removing distilled phenol to the outside of the system. The temperature was further kept increased, and when the absolute pressure in the second reactor reached 70 Pa (about 0.5 Torr), the pressure of 70 Pa was maintained to perform polycondensation reaction. The final internal temperature of the second reactor was 255°C. When the stirring power of the stirrer in the second reactor reached a predetermined value, the polycondensation reaction was stopped. After restoring the pressure in the rector with nitrogen, pressure was applied to allow extraction of the resulting product from the bottom of the tank. By cooling the product in a water-cooling tank, an aromatic polycarbonate copolymer was obtained. Thereafter, butyl paratoluenesulfonate was mixed at 5 ppm with the obtained aromatic polycarbonate copolymer, and the resulting mixture was melt-kneaded in a 30-mm diameter twin-screw extruder at 240°C to form a strand-shaped product, followed by cutting the product with a pelletizer to obtain a pellet-shaped aromatic polycarbonate copolymer.

Evaluation of Aromatic Polycarbonate Copolymers

[Viscosity Average Molecular Weight]

As described above, the viscosity average molecular weight of each aromatic polycarbonate copolymer was calculated by determining the intrinsic viscosity (limiting viscosity) [$\eta$] (unit, dL/g) of a solution in methylene chloride at 20°C using an Ubbelohde viscometer (manufactured by Moritomo Rika Kogyo), and applying the resulting value to the Schnell's viscosity equation, that is, $\eta = 1.23 \times 10^{-4}\ Mv^{0.83}$. Table-2 shows each of the values obtained.

[Glass Transition Temperature (Tg)]

As described above, the glass transition temperature (Tg) of each aromatic polycarbonate copolymer was determined using a differential scanning calorimeter (DSC 6220, manufactured by SII) according to JIS-K7121. Table-2 shows each of the values obtained.

[Amount of Terminal Hydroxyl Groups]

As described above, the amount of terminal hydroxyl groups in each aromatic polycarbonate copolymer was determined by colorimetry by the titanium tetrachloride/acetic acid method. Table-2 shows each of the values obtained.

[Flow Value (Q Value)]

As described above, the flow value (Q value) of each aromatic polycarbonate copolymer was measured using a CFT-500A type flow tester manufactured by Shimadzu Corporation and an orifice of 1-mm diameter $\times$ 10 mm according to Appendix C of JIS (1999) K7210 at 240°C at 160 kgf/cm$^2$ with a preheating time of 7 minutes. Table-2 shows each of the values obtained.

[Table 2]

Table-2

| | | Unit \ Abbreviation | Example 1 | Example 2 | Example 3 | Example 4 | Example 5 | Example 6 | Example 7 | Comparative Example 1 | Comparative Example 2 | Comparative Example 3 | Comparative Example 4 |
|---|---|---|---|---|---|---|---|---|---|---|---|---|---|
| | | | FI-1 | FI-2 | FI-3 | FI-7 | FI-8 | FI-9 | FI-10 | FI-4 | FI-5 | FI-6 | FI-11 |
| | | Production method | Production Example 1 | Production Example 2 | Production Example 2 | Production Example 2 | Production Example 2 | Production Example 2 | Production Example 2 | Production Example 2 | Production Example 2 | Production Example 1 | Production Example 2 |
| Composition ratios of dihydroxy compound structural units in aromatic polycarbonate copolymers | BPA | mol% | 70 | 80 | 70 | 88 | 85 | 67 | 64 | 90 | 60.83 | 70 | 62 |
| | BP-C10 | | 30 | | | | | | | | | | |
| | BP-C12 | | | 20 | 30 | 12 | 15 | 33 | 36 | 10 | 39.17 | | 38 |
| | BP-C8 | | | | | | | | | | | 30 | |
| Material feed ratios of dihydroxy compounds and carbonate-forming compound | BPA | Parts by mass | 62.0 | 72.0 | 60.0 | 82.5 | 78.5 | 56.7 | 53.4 | 85.3 | 50.0 | 64.1 | 51.2 |
| | BP-C10 | | 38.0 | | | | | | | | | | |
| | BP-C12 | | | 28.0 | 40.0 | 17.5 | 21.5 | 43.3 | 46.6 | 14.7 | 50.0 | | 48.8 |
| | BP-C8 | | | | | | | | | | | 91.1 | |
| | DPC | | 88.1 | 90.4 | 86.1 | 92.8 | 91.4 | 83.3 | 82.2 | 95.6 | 82.8 | 91.1 | 81.4 |
| Viscosity average molecular weight | | | 15300 | 14500 | 15600 | 12500 | 12900 | 15000 | 15600 | 13600 | 15400 | 11700 | 14800 |
| Intrinsic viscosity | | dL/g | 0.366 | 0.350 | 0.372 | 0.309 | 0.317 | 0.360 | 0.372 | 0.332 | 0.368 | 0.293 | 0.356 |
| Tg | | °C | | 97 | 83 | 109 | 104 | 77 | 75 | 119 | 66 | | 71 |
| Amount of terminal hydroxyl groups | | ppm | 1900 | 530 | 750 | 1020 | 920 | 840 | 900 | 370 | 360 | 2700 | 780 |
| Q value | | $10^{-2}$ $cm^3/sec$ | 48 | 35 | 48 | 51 | 52 | 61 | 60 | 30 | 62 | 31 | 72 |

Polycarbonate Resin (PC1)

A production example of the polycarbonate resin (PC1) listed in Table-3 is described below.

A material mixture was prepared by mixing 6700 g of BPA, listed in Table-1, as the material dihydroxy compound, and 6727 g of DPC, listed in Table-1, as the carbonate-forming compound, with 2 wt% aqueous solution of cesium carbonate as the catalyst, such that cesium carbonate was contained at 0.5 μmol per 1 mol of the total dihydroxy compounds. The mixture was fed to a first reactor having a capacity of 200 L equipped with a stirrer, heating medium jacket, vacuum pump, and reflux condenser. Subsequently, an operation of reducing the pressure in the first reactor to 1.33 kPa (10 Torr) and then restoring the pressure with nitrogen to atmospheric pressure was repeated five times, thereby replacing the inside of the first reactor with nitrogen. Thereafter, a heating medium at a temperature of 230°C was passed through the heating medium jacket to allow a slow increase in the internal temperature of the first reactor, thereby dissolving the mixture. Thereafter, the stirrer was rotated at 300 rpm, and the temperature in the heating medium jacket was controlled to keep the internal temperature of the first reactor at 220°C. Thereafter, the pressure in the first reactor, in terms of the absolute pressure, was reduced from 101.3 kPa (760 Torr) to 13.3 kPa (100 Torr) for 40 minutes, during which phenol produced as a by-product of oligomerization reaction of the dihydroxy compound and DPC in the first reactor was removed by distillation.

Subsequently, while the pressure in the first reactor was kept at 13.3 kPa, and while phenol was further removed by distillation, transesterification reaction was carried out for 80 minutes. The absolute pressure in the system was restored with nitrogen to 101.3 kPa, and then increased to 0.2 MPa in terms of the gauge pressure. The oligomer in the first reactor was transferred under the pressure to a second reactor through a transfer pipe preliminarily heated to not less than 200°C. The capacity of the second reactor was 200 L, and the reactor was equipped with a stirrer, heating medium jacket, vacuum pump, and reflux condenser. Its internal pressure had been adjusted to atmospheric pressure, and its internal temperature had been adjusted to 240°C.

The oligomer transferred under the pressure into the second reactor was stirred at 38 rpm, and the internal temperature was increased by the heating medium jacket. The absolute pressure in the second reactor was reduced from 101.3 kPa to 13.3 kPa for 40 minutes. Thereafter, the temperature was kept increased, and the internal pressure, in terms of the absolute pressure, was reduced from 13.3 kPa to 399 Pa (3 Torr) for 40 minutes while removing distilled phenol to the outside of the system. The temperature was further kept increased, and when the absolute pressure in the second reactor reached 70 Pa (about 0.5 Torr), the pressure of 70 Pa was maintained to perform polycondensation reaction. The final internal temperature of the second reactor was 255°C. When the stirring power of the stirrer in the second reactor reached a predetermined value, the polycondensation reaction was stopped. After restoring the pressure in the rector with nitrogen, pressure was applied to allow extraction of the resulting product from the bottom of the tank. By cooling the product in a water-cooling tank, an aromatic polycarbonate copolymer was obtained. Thereafter, butyl paratoluenesulfonate was mixed at 5 ppm with the obtained aromatic polycarbonate copolymer, and the resulting mixture was melt-kneaded in a 30-mm diameter twin-screw extruder at 240°C to form a strand-shaped product, followed by cutting the product with a pelletizer to obtain a pellet-shaped polycarbonate resin. The viscosity average molecular weight (Mv) was 13,000; the amount of terminal hydroxyl groups was 720 ppm; and the Q value was 16.

Polycarbonate Resin (PC2)

A production example of the polycarbonate resin (PC2) listed in Table-3 is described below.

The resin was produced in the same manner as in the Production Example for the polycarbonate resin (PC1) except that 6759 g of DPC, listed in Table-1, was used as the carbonate-forming compound, and that the predetermined stirring power of the stirrer of the second reactor was reduced. The viscosity average molecular weight (Mv) was 11,400; the amount of terminal hydroxyl groups was 660 ppm; and the Q value was 39.

Production of Thermoplastic Resin Compositions

The aromatic polycarbonate copolymers listed in Table-2 (FI-1 to FI-11) and the aromatic polycarbonate resins described above (PC1 and PC2) were mixed together at the ratios (parts by mass) described in the following Table-3, and, as an additive, 0.03 part by mass of a heat stabilizer 3,9-bis(2,6-di-tert-butyl-4-methylphenoxy)-2,4,8,10-tetraoxa-3,9-diphosphaspiro[5.5]undecane, that is, Adekastab (registered trademark) PEP-36 (abbreviated as PEP36), manufactured by ADEKA Corporation, was added to a total of 100 parts by mass of the aromatic polycarbonate copolymers and the aromatic polycarbonate resins, followed by mixing each resulting mixture. Thereafter, the mixture was fed to TEX30HSS, manufactured by Japan Steel Works, Ltd., which has one vent, and kneaded at a screw speed of 150 rpm, discharge rate of 15 kg/h, and barrel temperature of 240°C. The molten resin, extruded in a strand shape, was rapidly cooled in a water tank, and then pelletized using a pelletizer to obtain pellets of an aromatic polycarbonate resin composition.

Evaluation of Aromatic Polycarbonate Resin Compositions [Q Value]

The evaluation method for the Q values in Table-3 is the same as that for the aromatic polycarbonate copolymers described above. Table-3 shows the values obtained.

[Evaluation of Impact Resistance]

The pellets of the aromatic polycarbonate resin composition obtained by the production method described above were dried at 100°C for 5 to 7 hours using a hot-air drier, and then subjected to injection molding using a J75EII type injection molding machine manufactured by Japan Steel Works Ltd., at a cylinder temperature of 240°C and a mold temperature of 70°C with a molding cycle of 40 seconds to mold an Izod impact test piece having a thickness of 3.2 mm according to ASTM-D256. Subsequently, using a notching tool manufactured by Toyo Seiki Seisakusho, Ltd., a 0.25R V-notch was formed by cutting, and an Izod impact test according to the above ASTM-D256 was carried out to determine the Izod impact strength (unit: J/m). Table-3 shows the values obtained.

[Evaluation of Bending Resistance]

By the same method as described above, a molded article having a length of 125 mm, width of 12.5 mm, and thickness of 3 mm was molded. Using the obtained molded article as a test piece, and using an RTM-100 type universal tester manufactured by Orientec Co., Ltd., a bending stress was applied in the direction of the thickness of 3 mm described above by a pressure wedge to give a displacement of up to 10 mm under the following conditions: distance between supporting points, 64 mm; test speed, 2 mm/sec. This test was carried out three times, and the mean value of the displacements in cases of breakage was determined as the bending breaking displacement (unit: mm), and the mean value of the bending strengths at breakage was determined as the bending breaking strength (unit: MPa). A larger bending displacement is preferred since it means that breakage is less likely to occur even with a larger displacement. A higher bending strength is preferred since it means a higher material strength. Table-3 shows the values obtained.

[Evaluation of Transparency]

Under the same conditions as those for the Izod impact test piece described above, a 60-mm flat-plate-shaped test piece having 60-mm, a width of 60 mm, and a thickness of 3 mm was molded. Using the obtained flat-plate-shaped test piece, evaluation of the haze (unit: %) was carried out according to the JIS K 7136:2000 standard. The haze is an index of transparency. A lower haze means higher transparency, which is preferred. Table-3 shows the values obtained.

[Evaluation 1 of Compatibility]

Each aromatic polycarbonate copolymer listed in Table-2 and the aromatic polycarbonate resin (PC1) described above were fed to a glass reactor having a capacity of 150 mL at the material feed ratios described in Table-4, such that the total amount of the aromatic polycarbonate copolymer and the aromatic polycarbonate resin was 100 g. An operation of reducing the pressure in the glass reactor and then restoring the pressure with nitrogen to atmospheric pressure was repeated three times, thereby replacing the inside of the reactor with nitrogen. Thereafter, the external temperature of the reactor was adjusted to 255°C to allow a slow increase in the internal temperature of the reactor, thereby dissolving the mixture. Thereafter, the stirrer was rotated at 10 rpm, and melt mixing was performed for 30 minutes. The pressure in the glass container was reduced to 60 Torr to allow evaporation, and then the pressure was restored again with nitrogen. The polycarbonate resin composition was collected from the glass container. In cases where both the polycarbonate resin composition in the glass container after the melt mixing and the polycarbonate resin composition obtained after cooling are transparent, the aromatic polycarbonate copolymer is considered to have high compatibility with the thermoplastic resin. This is preferred since a thermoplastic resin composition having high mechanical strength and transparency can be obtained. On the other hand, in cases where these are cloudy (opaque), the aromatic polycarbonate copolymer has low compatibility with the thermoplastic resin, which is not preferred since the mechanical properties and the transparency may be low. In cases where both the polycarbonate resin composition in the glass container after the melt mixing and the polycarbonate resin composition obtained could be judged to be transparent as described above, the compatibility was represented as "o", while in cases where they were judged to be cloudy (opaque), the compatibility was represented as "×" in Table-4.

[Evaluation 2 of Compatibility]

For detailed evaluation of the relationship between the ratio of the carbonate structural unit (A) in the aromatic

polycarbonate copolymer of the present invention and the compatibility with the thermoplastic resin, the aromatic polycarbonate copolymers listed in Table-2 and the aromatic polycarbonate resin (PC1) described above were mixed together as pellets at the material feed ratios described in Table-4. Each resulting mixture was fed to TEX30HSS, manufactured by Japan Steel Works, Ltd., which has one vent, and kneaded at a screw speed of 300 rpm, discharge rate of 15 kg/h, and barrel temperature of 240°C. The molten resin, extruded in a strand shape, was rapidly cooled in a water tank, and then pelletized using a pelletizer to obtain pellets of an aromatic polycarbonate resin composition. In this process, the polycarbonate resin composition extruded in a strand shape was visually observed. In cases where the composition could be judged to be transparent, the compatibility was represented as "∘", while in cases where it was judged to be cloudy (opaque), the compatibility was represented as "×" in Table-4. The obtained pellets were further evaluated for the haze (unit: %) by the same method as in the evaluation of transparency described above. In Table-4, the values of the haze are shown in parentheses. A smaller haze value indicates better transparency and better compatibility, which is preferred.

[Table 3]

Table-3

| | | | Example 8 | Example 9 | Example 10 | Example 11 | Example 12 | Example 13 | Example 14 | Example 15 | Example 16 | Example 17 | Comparative Example 5 | Comparative Example 6 | Comparative Example 7 |
|---|---|---|---|---|---|---|---|---|---|---|---|---|---|---|---|
| Resin composition | PC1 | Parts by mass | 55 | 42 | 48 | 49 | 50 | 51 | 54 | 60 | 56 | 55 | 46 | 41 | 37 |
| | PC2 | | 3 | 32 | 42 | 37 | 33 | 25 | 12 | | 15 | 30 | 54 | 42 | 29 |
| | FI-1 | | 42 | | | | | | | | | | | | |
| | FI-2 | | | 26 | | | | | | | | | | | |
| | FI-3 | | | | 10 | 14 | 17 | 24 | 34 | | | | | | |
| | FI-4 | | | | | | | | | | | | | 17 | |
| | FI-6 | | | | | | | | | | | | | | 34 |
| | FI-7 | | | | | | | | | 40 | | | | | |
| | FI-8 | | | | | | | | | | 29 | | | | |
| | FI-10 | | | | | | | | | | | 15 | | | |
| Ratio of carbonate structural unit (A) to polycarbonate resin total carbonate structural units in thermoplastic resin composition | | mol% | 9.2 | 5.2 | 2.6 | 3.7 | 4.5 | 6.4 | 9.2 | 4.6 | 4.5 | 4.3 | 0.0 | 1.6 | 4.7 |
| Tg °C Q value | | $10^{-2}$ $cm^3$/sec | 121 28 | 126 28 | 129 28 | 128 28 | 127 29 | 124 29 | 120 28 | 126 28 | 127 29 | 126 28 | 133 27 | 131 27 | 132 27 |
| Izod impact test | | J/m | 26 | 17 | 27 | 31 | 43 | 46 | 48 | 30 | 38 | 38 | 11 | 13 | 13 |
| Bending breaking displacement | | mm | 4.4 | 5.6 | 4.7 | 4.6 | 3.9 | 5.0 | 4.8 | 4.4 | 4.6 | - | 3.4 | 3.9 | 3.3 |
| Bending breaking strength | | MPa | 39 | 48 | 42 | 40 | 34 | 44 | 42 | 38 | 41 | - | 32 | 35 | 31 |
| Haze | | % | 0.7 | 0.7 | 0.6 | 0.6 | 0.7 | 0.6 | 0.7 | 0.7 | 0.8 | 0.9 | 0.7 | 0.6 | 0.7 |

It can be seen that the polycarbonate resin compositions containing fluidity modifiers for thermoplastic resin of the present invention (Examples 8 to 17) have better impact strength and bending strength compared to the polycarbonate resin composition containing no fluidity modifier for thermoplastic resin of the present invention (Comparative Example 5) when the fluidity of the final composition is at the equivalent level. It can also be seen that Comparative Example 6 and Comparative Example 7, which use fluidity modifiers composed of aromatic polycarbonate copolymers outside the range defined in the present invention, have insufficient impact strength compared to Examples 12 and 14, respectively, which contain the same parts by mass of aromatic polycarbonate copolymers. Thus, it is clear that the inclusion of a particular carbonate structure (A) at a particular ratio in the fluidity development material for thermoplastic resin of the present invention is important.

[Table 4]

Table-4

| | | | Example 18 | Example 19 | Example 20 | Example 21 | Example 22 | Example 23 | Comparative Example 8 | Comparative Example 9 |
|---|---|---|---|---|---|---|---|---|---|---|
| Resin compositi on | PC1 | Partsby mass | 60.0 | 51.0 | 63.0 | 50.0 | 74.5 | 74.5 | 74.5 | 75.5 |
| | FI-1 | | 40.0 | | | | | | | |
| | FI-2 | | | 49.0 | | | | | | |
| | FI-3 | | | | 37.0 | | | | | |
| | FI-5 | | | | | | | | 25.5 | |
| | FI-7 | | | | | 50.0 | | | | |
| | FI-9 | | | | | | 25.5 | | | |
| | FI-10 | | | | | | | 25.5 | | |
| | FI-11 | | | | | | | | | 24.5 |
| Ratio of carbonate structural unit (A) to polycarbonate resin total carbonate structural units in thermoplastic resin composition | | | 10.2 | 10.0 | 10.1 | 6.3 | 8.0 | 8.0 | 6.5 | 8.0 |
| Evaluation of compatibility 1 | | | ∘ | ∘ | ∘ | ∘ | | | × | × |
| Evaluation of compatibility 2 | | | | | ∘ (0.6) | | ∘ (0.6) | ∘ (0.9) | | × (3.6) |

As is evident from Table-4, while the fluidity modifiers for thermoplastic resin of the present invention have very high compatibilities with the polycarbonate resin (Examples 18 to 23), the aromatic polycarbonate copolymers in Comparative Examples 8 and 9, which use fluidity modifiers composed of aromatic polycarbonate copolymers outside the range defined in the present invention, have only insufficient compatibilities with the polycarbonate resin, and fail to achieve the transparency. Thus, it is again clear that the inclusion of a particular carbonate structure (A) at a particular ratio in the fluidity development material of the present invention is important. It was shown, in the Examples, that thermoplastic resins having better mechanical properties can be obtained even when the melt viscosity is adjusted to an equivalent level. On the other hand, thermoplastic resin compositions having better fluidity can be obtained even when equivalent levels of mechanical properties are obtained.

Polycarbonate Resin (PC3)

A production example of the polycarbonate resin (PC3) listed in Table-5 is described below.

The resin was produced in the same manner as in the Production Example for the polycarbonate resin (PC1) except that 2,2-bis(4-hydroxy-3-methylphenyl)propane (manufactured by Honshu Chemical Industry Co., Ltd.) (which may be hereinafter simply referred to as BPC) was used as the material dihydroxy compound, that the amount of DPC, listed in Table-1, was 5879 g, that the amount of cesium carbonate was 1.5 pmol per 1 mol of the total hydroxy compounds, and that the target value of the stirring power of the stirrer of the second reactor was separately set. The viscosity average molecular weight (Mv) was 14,800; the amount of terminal hydroxyl groups was 480 ppm; and the Q value was 24.

Polycarbonate Resin (PC4)

The resin was produced in the same manner as in the Production Example for the polycarbonate resin (PC3) except that the target value of the stirring power of the stirrer of the second reactor was separately set. The viscosity average molecular weight (Mv) was 15,400; the amount of terminal hydroxyl groups was 320 ppm; and the Q value was 16.

Polycarbonate Resin (PC5)

A production example of the polycarbonate resin (PC5) listed in Table-5 is described below.

The resin was produced in the same manner as in the Production Example for the polycarbonate resin (PC1) except that 3455 g of BPA, and 1,1-bis(4-hydroxyphenyl)ethane (manufactured by Honshu Chemical Industry Co., Ltd.) (which may be hereinafter simply referred to as BPE) were used as material dihydroxy compounds, and that the target value of the stirring power of the stirrer of the second reactor was separately set. The viscosity average molecular weight (Mv) was 13,900; the amount of terminal hydroxyl groups was 790 ppm; and the Q value was 21.

Polycarbonate Resin (PC6)

The resin was produced in the same manner as in the Production Example for the polycarbonate resin (PC3) except that the target value of the stirring power of the stirrer of the second reactor was separately set. The viscosity average molecular weight (Mv) was 15,100; the amount of terminal hydroxyl groups was 590 ppm; and the Q value was 15.

The polycarbonate resins (PC3) to (PC-6) described above and an aromatic polycarbonate copolymer listed in Table-2 were mixed together at the ratios (parts by mass) described in the following Table-5. Each resulting mixture was fed to TEX30HSS, manufactured by Japan Steel Works, Ltd., which has one vent, and kneaded at a screw speed of 150 rpm, discharge rate of 15 kg/h, and barrel temperature of 240°C. The molten resin, extruded in a strand shape, was rapidly cooled in a water tank, and then pelletized using a pelletizer to obtain pellets of the aromatic polycarbonate resin composition. The composition was subjected to the same kinds of evaluation as those in Table-3. The results are shown in Table-5.

[Table 5]

Table-5

<table>
<tr><td colspan="3"></td><td>Example 24</td><td>Comparati ve Example 10</td><td>Example 25</td><td>Comparati ve Example 11</td></tr>
<tr><td rowspan="5">Resin compositi on</td><td>PC3</td><td rowspan="5">Parts by mass</td><td>100</td><td></td><td></td><td></td></tr>
<tr><td>PC4</td><td></td><td>78</td><td></td><td></td></tr>
<tr><td>PC5</td><td></td><td></td><td>100</td><td></td></tr>
<tr><td>PC6</td><td></td><td></td><td></td><td>78</td></tr>
<tr><td>FI-9</td><td></td><td>22</td><td></td><td>22</td></tr>
<tr><td colspan="2">Ratio of carbonate structural unit (A) to polycarbonate resin total carbonate structural units in thermoplastic resin composition</td><td>mol%</td><td>0.0</td><td>8.7</td><td>0.0</td><td>6.2</td></tr>
<tr><td colspan="2">Q value</td><td>$10^{-2}$ $cm^3/sec$</td><td>26</td><td>26</td><td>22</td><td>23</td></tr>
<tr><td colspan="2">Izod impact test</td><td>J/m</td><td>12</td><td>23</td><td>7</td><td>17</td></tr>
<tr><td colspan="2">Haze</td><td>%</td><td>0.7</td><td>0.8</td><td>0.6</td><td>0.7</td></tr>
</table>

From the results in Table-5, it is clear that the aromatic polycarbonate copolymer of the present invention acts as a fluidity modifier for thermoplastic resin that improves the balance between the fluidity and mechanical properties in a variety of thermoplastic resins.

A fluidity modifier for thermoplastic resin is required to improve the fluidity without deteriorating the mechanical strength, in other words, to improve the strength when the fluidity is equivalent. When an attempt is made to increase the fluidity, aromatic polycarbonate resins show remarkable decreases in the strength compared to other thermoplastic resins. However, according to the Examples, aromatic polycarbonate resin compositions having excellent balances between the fluidity and mechanical properties can be provided when the fluidity modifier for thermoplastic resin of the present invention containing an aromatic polycarbonate copolymer is included in aromatic polycarbonate resins. Thus, it can be seen that the fluidity modifier is very useful for thermoplastic resins.

Among thermoplastic resins, transparent resins, especially aromatic polycarbonate resins, are required to have high transparency even after inclusion of a fluidity modifier therein for improvement of the fluidity. Therefore, the fluidity modifier is required to achieve not only the balance between the fluidity and the mechanical strength, but also high compatibility with thermoplastic resins. It is thought that compatibility between a thermoplastic resin and a fluidity modifier is influenced mainly by the polarity, bulkiness, and the like of each molecular structure. However, in the Examples, it was shown that similar favorable compatibilities can be obtained for resins that are different in these characteristics.

Thus, a thermoplastic resin composition having an excellent balance between the fluidity and mechanical properties can be provided by inclusion, in a thermoplastic resin, of the fluidity modifier for ) thermoplastic resin of the present invention containing an aromatic polycarbonate copolymer. It can therefore be seen that the fluidity modifier is very useful for thermoplastic resins.

## Claims

1. A fluidity modifier for thermoplastic resin, said fluidity modifier comprising an aromatic polycarbonate copolymer containing:

a carbonate structural unit (A) represented by the following Formula (1):

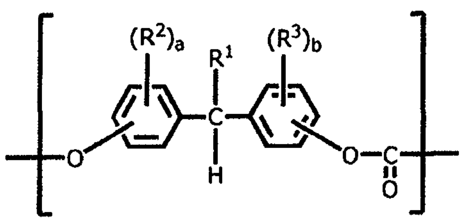
(1)

(wherein in Formula (1), $R^1$ represents $C_8$-$C_{24}$ alkyl; $R^2$ and $R^3$ each independently represent a $C_1$-$C_{15}$ monovalent hydrocarbon group; and a and b each independently represent an integer of 0 to 4); and a carbonate structural unit (B) represented by the following Formula (2):

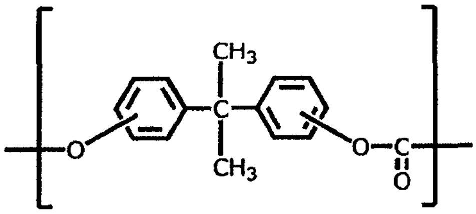
(2)

;

wherein the ratio of the carbonate structural unit (A) to a total of 100 mol% of the carbonate structural unit (A) and the carbonate structural unit (B) is more than 10 mol% and not more than 36.5 mol%.

2. The fluidity modifier for thermoplastic resin according to claim 1, wherein said carbonate structural unit (A) is represented by the following Formula (3) or (4):

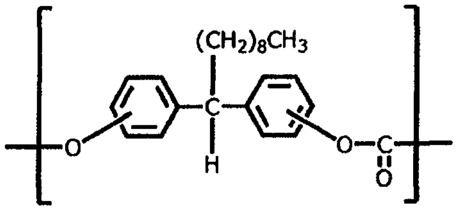
(3)

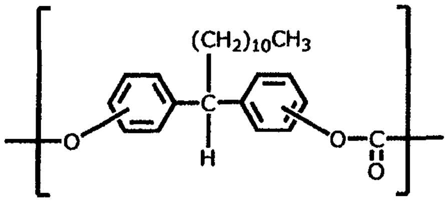
(4)

3. The fluidity modifier for thermoplastic resin according to claim 1 or 2, wherein the flow value (Q value) as measured using a Koka flow tester according to Appendix C of JIS (1999) K7210 at 240°C at 160 kgf is not less than 30 (unit: $10^{-2}$ $cm^3$/sec.).

4. A thermoplastic resin composition comprising 2 to 100 parts by mass of the fluidity modifier for thermoplastic resin recited in any one of claims 1 to 3 and 100 parts by mass of a thermoplastic resin.

5. The thermoplastic resin composition according to claim 4, further comprising at least one selected from the group consisting of heat stabilizers, antioxidants, ultraviolet absorbers, brightness improvers, dyes, pigments, and mold release agents.

6. The thermoplastic resin composition according to claim 4 or 5, wherein said thermoplastic resin is a polycarbonate resin.

7. The thermoplastic resin composition according to claim 4 or 5, wherein said thermoplastic resin is a polycarbonate resin, and the ratio of said carbonate structural unit (A) to the total carbonate structural units in said thermoplastic resin composition is 1 to 20 mol%.

8. The thermoplastic resin composition according to any one of claims 4 to 7, wherein the flow value (Q value) as measured using a Koka flow tester according to Appendix C of JIS (1999) K7210 at 240°C at 160 kgf is not less than 6 (unit: $10^{-2}$ $cm^3$/sec.).

9. The thermoplastic resin composition according to any one of claims 4 to 8, having a glass transition temperature (Tg), determined according to JIS-K7121 using differential scanning calorimeter, DSC 6220 manufactured by SII, of 90 to 145°C.

10. A method for producing a thermoplastic resin molded article, said method comprising a step of obtaining a molded article by injection molding of the thermoplastic resin composition recited in any one of claims 4 to 9.

**Patentansprüche**

1. Ein Fluiditätsmodifikator für thermoplastisches Harz, wobei der Fluiditätsmodifikator ein aromatisches Polycarbonat-Copolymer umfasst, enthaltend:

eine Carbonat-Struktureinheit (A), dargestellt durch die folgende Formel (1):

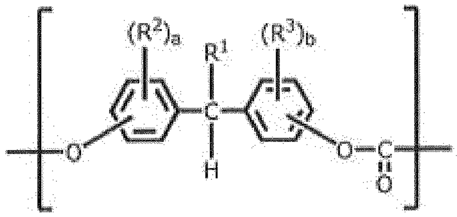
(1)

(wobei in Formel (1) $R^1$ für $C_8$-$C_{24}$-Alkyl steht; $R^2$ und $R^3$ jeweils unabhängig eine einwertige $C_1$-$C_{15}$-Kohlenwasserstoffgruppe darstellen; und a und b jeweils unabhängig eine ganze Zahl von 0 bis 4 darstellen); und eine Carbonat-Struktureinheit (B), dargestellt durch die folgende Formel (2):

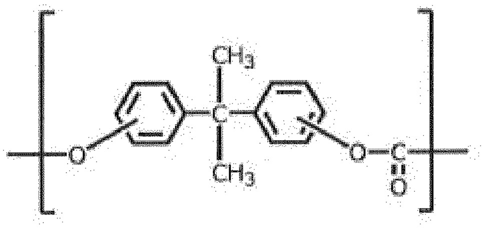
(2)

;

wobei das Verhältnis der Carbonat-Struktureinheit (A) zu insgesamt 100 mol-% der Carbonat-Struktureinheit (A) und der Carbonat-Struktureinheit (B) mehr als 10 Mol-% und nicht mehr als 36,5 Mol-% beträgt.

2. Der Fluiditätsmodifikator für thermoplastisches Harz gemäß Anspruch 1, wobei die Carbonat-Struktureinheit (A) durch die folgende Formel (3) oder (4) dargestellt ist:

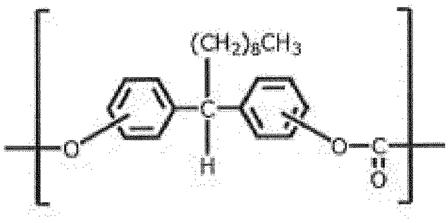
(3)

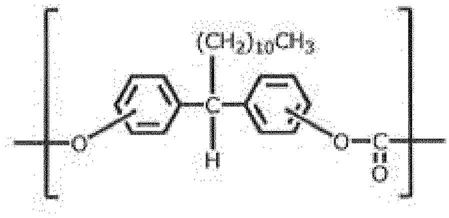

(4)

3. Der Fluiditätsmodifikator für thermoplastisches Harz gemäß Anspruch 1 oder 2, wobei der Fließwert (Q-Wert), gemessen unter Verwendung eines Fließprüfgeräts vom Koka-Typ gemäß Anlage C von JIS (1999) K7210 bei 240°C bei 160 kgf, nicht weniger als 30 (Einheit: $10^{-2}$ $cm^3/s$) beträgt.

4. Eine thermoplastische Harzzusammensetzung, umfassend 2 bis 100 Massenteile des Fluiditätsmodifikators für thermoplastisches Harz, wie in einem der Ansprüche 1 bis 3 dargelegt, und 100 Massenteile eines thermoplastischen Harzes.

5. Die thermoplastische Harzzusammensetzung gemäß Anspruch 4, ferner umfassend mindestens eines, ausgewählt aus der Gruppe bestehend aus Wärmestabilisatoren, Antioxidantien, Ultraviolettabsorbern, Glanzverbesserern, Farbstoffen, Pigmenten und Formtrennmitteln.

6. Die thermoplastische Harzzusammensetzung gemäß Anspruch 4 oder 5, wobei das thermoplastische Harz ein Polycarbonatharz ist.

7. Die thermoplastische Harzzusammensetzung gemäß Anspruch 4 oder 5, wobei das thermoplastische Harz ein Polycarbonatharz ist und das Verhältnis der Carbonat-Struktureinheit (A) zu den gesamten Carbonat-Struktureinheiten in der thermoplastischen Harzzusammensetzung 1 bis 20 Mol-% beträgt.

8. Die thermoplastische Harzzusammensetzung gemäß einem der Ansprüche 4 bis 7, wobei der Fließwert (Q-Wert), gemessen unter Verwendung eines Fließprüfgeräts vom Koka-Typ gemäß Anlage C von JIS (1999) K7210 bei 240°C bei 160 kgf, nicht weniger als 6 (Einheit: $10^{-2}$ $cm^3/s$) beträgt.

9. Die thermoplastische Harzzusammensetzung gemäß einem der Ansprüche 4 bis 8, welche eine Glasübergangstemperatur (Tg), bestimmt gemäß JIS-K7121 unter Verwendung eines Differentialscanningkalorimeters, DSC 6220, hergestellt durch SII, von 90 bis 145°C aufweist.

10. Ein Verfahren zur Herstellung eines thermoplastischen Harzformgegenstandes, wobei das Verfahren einen Schritt des Erhaltens eines Formgegenstandes durch Spritzgießen der thermoplastischen Harzzusammensetzung, wie in einem der Ansprüche 4 bis 9 dargelegt, umfasst.

## Revendications

1. Modificateur de fluidité pour résine thermoplastique, ledit modificateur de fluidité comprenant un copolymère de polycarbonate aromatique contenant :

une unité structurelle de carbonate (A) représentée par la formule (1) suivante :

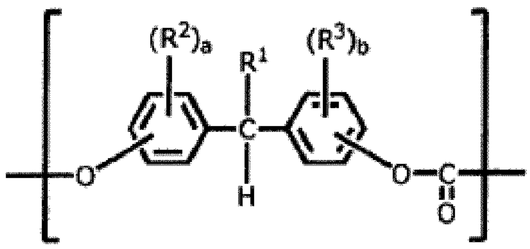

(1)

(où dans la formule (1), $R^1$ représente un alkyle en $C_8$-$C_{24}$ ; $R^2$ et $R^3$ représentent chacun indépendamment

un groupe hydrocarboné monovalent en $C_1$-$C_{15}$ ; et a et b représentent chacun indépendamment un nombre entier de 0 à 4) ; et
une unité structurelle de carbonate (B) représentée par la formule (2) suivante :

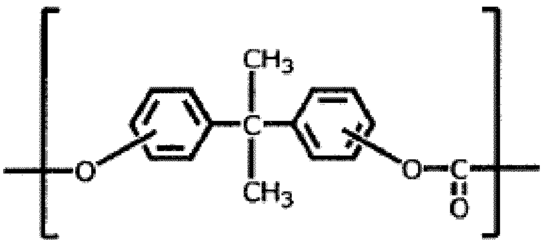
(2)

;

dans laquelle le rapport de l'unité structurelle de carbonate (A) à un total de 100 % en mole de l'unité structurelle de carbonate (A) et de l'unité structurelle de carbonate (B) est supérieur à 10 % en mole et d'au plus 36,5 % en mole.

**2.** Modificateur de fluidité pour résine thermoplastique selon la revendication 1, dans lequel ladite unité structurelle de carbonate (A) est représentée par la formule (3) ou (4) suivante :

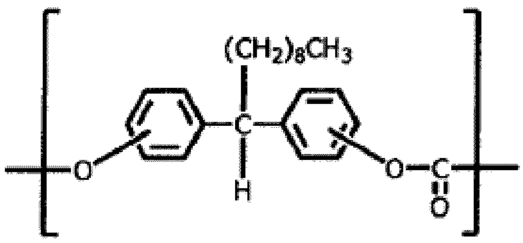
(3)

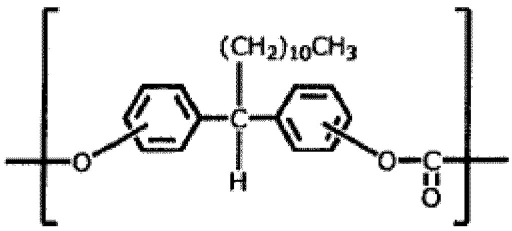
(4)

**3.** Modificateur de fluidité pour résine thermoplastique selon la revendication 1 ou 2, dans lequel la valeur d'écoulement (valeur Q) comme mesurée en utilisant un dispositif de test d'écoulement Koka selon l'annexe C de JIS (1999) K7210 à 240°C à 160 kgf n'est pas inférieure à 30 (unité : $10^{-2}$ $cm^3/s$).

**4.** Composition de résine thermoplastique comprenant de 2 à 100 parties en masse du modificateur de fluidité pour résine thermoplastique selon l'une quelconque des revendications 1 à 3 et 100 parties en masse d'une résine thermoplastique.

**5.** Composition de résine thermoplastique selon la revendication 4, comprenant de plus au moins un choisi dans le groupe consistant en stabilisants thermiques, antioxydants, absorbants d'ultraviolets, améliorateurs de brillance, colorants, pigments, et agents de démoulage.

**6.** Composition de résine thermoplastique selon la revendication 4 ou 5, dans laquelle ladite résine thermoplastique est une résine de polycarbonate.

**7.** Composition de résine thermoplastique selon la revendication 4 ou 5, dans laquelle ladite résine thermoplastique est une résine de polycarbonate, et le rapport de ladite unité structurelle de carbonate (A) au total des unités structurelles de carbonate dans ladite composition de résine thermoplastique est de 1 à 20 % en mole.

**8.** Composition de résine thermoplastique selon l'une quelconque des revendications 4 à 7, dans laquelle la valeur d'écoulement (valeur Q) comme mesurée en utilisant un dispositif de test d'écoulement Koka selon l'annexe C de JIS (1999) K7210 à 240°C à 160 kgf n'est pas inférieure à 6 (unité : $10^{-2}$ $cm^3/s$).

**9.** Composition de résine thermoplastique selon l'une quelconque des revendications 4 à 8, ayant une température de transition vitreuse (Tg), déterminée selon JIS-K7121 en utilisant un calorimètre différentiel, DSC 6220 fabriqué par SII, de 90 à 145°C.

**10.** Procédé pour la production d'un article moulé en résine thermoplastique, ledit procédé comprenant une étape d'obtention d'un article moulé par moulage par injection de la composition de résine thermoplastique selon l'une quelconque des revendications 4 à 9.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 436295 B
- JP 3815225 B
- JP 2009001619 A
- JP 1096245 A
- JP 5269585 B
- JP 2007031682 A
- US 2009117478 A1
- US 4446285 A


### Non-patent literature cited in the description


- *Macromol. Chem.,* 1965, vol. 88, 215